(19) **Europäisches Patentamt / European Patent Office / Office européen des brevets**

(11) **EP 4 671 038 A1**

(12) **EUROPEAN PATENT APPLICATION**

(43) Date of publication:
31.12.2025 Bulletin 2026/01

(21) Application number: 25185375.0

(22) Date of filing: 26.06.2025

(51) International Patent Classification (IPC):
B60L 55/00 (2019.01)   G06N 10/60 (2022.01)
H02J 3/32 (2006.01)   B60L 53/63 (2019.01)
B60L 53/64 (2019.01)   B60L 53/66 (2019.01)
B60L 53/67 (2019.01)   B60L 53/68 (2019.01)

(52) Cooperative Patent Classification (CPC):
B60L 55/00; B60L 53/63; B60L 53/64; B60L 53/66;
B60L 53/67; B60L 53/68; G06N 10/00;
G06N 10/20; G06N 10/60; G06N 20/00;
G06N 20/10; H02J 3/322; B60L 2260/46

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 26.06.2024 US 202418755219

(71) Applicants:
• E.ON Digital Technology GmbH
30459 Hannover (DE)
• International Business Machines Corporation
Armonk, New York 10504 (US)

(72) Inventors:
• Agliardi, Gabriele Francesco Maria
20054 Segrate (IT)
• Dekusar, Anton
Dublin, L D02 F6N2 (IE)

• Bahadur Ghosh, Dr. Kumar Jang
80639 München (DE)
• Giorgio, Dr. Cortiana
80639 München (DE)
• Mohseni, Dr. Naeimeh
82266 Inning Ammersee (DE)
• O Meara, Dr. Corey
80639 München (DE)
• Delgado, Victor Valls
Dublin, L D02 F6N2 (IE)
• Walther, Dr. Georg
30539 Hannover (DE)
• Yogaraj, Kavitha Hassan
560045 Bangalore (IN)
• Zhuk, Sergiy
Dublin, L D02 F6N2 (IE)

(74) Representative: Bals & Vogel Patentanwälte
PartGmbB
Konrad-Zuse-Str. 4
44801 Bochum (DE)

(54) **DYNAMIC SCHEDULING OF ELECTRIC VEHICLE BIDIRECTIONAL CHARGING**

(57) An exemplary system comprises a memory that stores and a processor that executes computer executable components stored in the memory, wherein the computer executable components comprise an optimizing component that generates a fleet-level solution for maintaining a vehicle-to-grid (V2G) system by a fleet of electric vehicles (EVs), and a scheduling component that constructs a schedule for bidirectional charging of a portion of the fleet by disaggregating the fleet-level solution based on a multi-class classification resulting from an execution of a quantum algorithm, based on a covariant quantum kernel, on a quantum system. In one or more embodiments, the multi-class classification comprises classes of charging, discharging, and no bidirectional charging.

FIG. 1

**Description**

BACKGROUND

The subject disclosure relates to dynamic scheduling of electric vehicle bidirectional charging to allow for reduced expenses relative to intraday electricity market trading, among other benefits.

SUMMARY

The following presents a summary to provide a basic understanding of one or more embodiments described herein. This summary is not intended to identify key or critical elements, and/or to delineate scope of particular embodiments or scope of claims. Its sole purpose is to present concepts in a simplified form as a prelude to the more detailed description that is presented later. In one or more embodiments, systems, computer-implemented methods, apparatuses and/or computer program products described herein can provide for utilization of electric vehicles (EVs), and particularly the batteries of EVs, as a storage solution to support a power grid.

In accordance with an embodiment, a system can comprise a memory that stores and a processor that executes computer executable components stored in the memory, wherein the computer executable components comprise an optimizing component that generates a fleet-level solution for maintaining a vehicle-to-grid (V2G) system by a fleet of electric vehicles (EVs), and a scheduling component that constructs a schedule for bidirectional charging of a portion of the fleet by disaggregating the fleet-level solution based on a multi-class classification resulting from an execution of a quantum algorithm, based on a covariant quantum kernel, on a quantum system.

As used herein, the term "bidirectional charging" can refer to either charging of an EV from a V2G system or discharging of an EV to a V2G system (e.g., increase of available power to the V2G system from the EV). As used herein, the term "no bidirectional charging" can refer to a state of non-charging and non-discharging.

A system may be provided, wherein the covariant quantum kernel is tuned based on an assumption of a group structure employing a discrete set of classes upon which the multi-class classification is based. Furthermore, a system may be provided, wherein the schedule comprises a bidirectional charging suggestion for at least one class of the discrete set of classes upon which the covariant quantum kernel has been tuned. In one or more embodiments of the system, the multi-class classification comprises classes of charging, discharging, and no bidirectional charging. A system may be provided, wherein the computer executable components further comprise a training component that generates a quantum a kernel alignment that guides generation of the covariant quantum kernel, wherein the quantum kernel alignment is based on an assumption of a group structure, and wherein the training component trains a prediction model, employed by the optimizing component, based on the covariant quantum kernel. Furthermore, a system may be provided, wherein the scheduling component classifies individual EVs of the fleet for bidirectional charging by comparing a feature set, comprising individual EV charge state data and individual EV connection state data, to the fleet-level solution. A system may be provided, wherein the computer executable components further comprise an aggregating component that constructs a fleet-level feature set corresponding to a specified time by transforming individual EV charge state data and individual EV connection state data for a plurality of EVs of the fleet into the higher granularity fleet-level feature set; and a covariant quantum kernel-based prediction model that employs the fleet-level feature set as an input for the generation of the fleet-level solution that comprises the multi-class classification. Furthermore, a system may be provided, wherein the computer executable components further comprise an iterating component that controls re-construction of the schedule at a specified frequency corresponding to a set of specified times over a specified time range, wherein the iterating component initiates the re-construction of the schedule prior to output of the schedule. A system may be provided, wherein the computer executable components further comprise a modifying component which executes a modification of the specified frequency employed by the iterating component, based on an intraday electricity market projection and on providable electricity at the V2G corresponding to a time of the modification. Furthermore, a system may be provided, wherein the scheduling component constructs the schedule to comprise data applicable over plural specified times corresponding to plural apexes of a specified frequency driving regeneration of the schedule.

In accordance with another embodiment, a computer-implemented method, in particular for a system according to the invention, can comprise generating, by a system operatively coupled to a processor, a fleet-level solution for maintaining a vehicle-to-grid (V2G) system by a fleet of electric vehicles (EVs); and constructing, by the system, a schedule for bidirectional charging of a portion of the fleet by disaggregating the fleet-level solution based on a multi-class classification resulting from an execution of a quantum algorithm, based on a covariant quantum kernel, on a quantum system. A method may be provided, wherein the covariant quantum kernel is tuned based on an assumption of a group structure employing a discrete set of classes upon which the multi-class classification is based. Furthermore, a method may be provided, wherein the schedule comprises a bidirectional charging suggestion for at least one class of the discrete set of classes upon which the covariant quantum kernel has been tuned. A method may be provided, wherein the multi-class classification comprises classes of charging, discharging, and no bidirectional charging. Furthermore, a method may be provided comprising generating, by the system, a quantum kernel alignment that guides generation of the covariant quantum kernel, wherein the quantum kernel alignment is based on an assumption of a group structure; and training, by the system, a prediction model, employed for the fleet-level solution generating, based on the covariant quantum kernel. A method may be provided comprising classifying, by the system, individual EVs of the fleet for bidirectional charging by comparing a feature set, comprising individual EV charge state data and individual EV connection state data, to the fleet-level solution.

In accordance with still another embodiment, a computer program product facilitating a process to determine dynamic scheduling of electric vehicle bidirectional charging, and/or to maintain a vehicle-to-grid system, can comprise a computer readable storage medium having program instructions embodied therewith, the program instructions executable by a processor to cause the processor to generate, by the processor, a fleet-level solution for maintaining the vehicle-to-grid (V2G) system by a fleet of electric vehicles (EVs), and construct, by the processor, a schedule for bidirectional charging of a portion of the fleet by disaggregating the fleet-level solution based on a multi-class classification resulting from an execution of a quantum algorithm based on a covariant quantum kernel, on a quantum system. The computer program product may comprise instructions, which, when executed by a processor, cause the processor to implement the computer-implemented method (of the present invention). A computer program product may be provided, wherein the covariant quantum kernel is tuned based on an assumption of a group structure employing a discrete set of classes upon which the multi-class classification is based. Furthermore, a computer program product may be provided, wherein the schedule comprises a bidirectional charging suggestion for at least one class of the discrete set of classes upon which the covariant quantum kernel has been tuned. A computer program product may be provided, wherein the multi-class classification comprises classes of charging, discharging, and no bidirectional charging.

A benefit of the system, and/or of a corresponding computer-implemented method and/or computer program product, can be an ability to deliver, using EV battery capacity, electricity as close to as possible to the committed volume marketed on a corresponding day-ahead electricity market, thereby reducing expenses incurred from purchasing energy on a corresponding intraday electricity market to make up for an electricity contribution that is less than the committed volume. Features and details which are described in the context of the system according to the invention can also apply and/or be part in the context of the computer-implemented method and/or computer program product and vice versa, so that with respect to the disclosure, reference is or can always be made to the individual aspects of the invention.

Another benefit can be an ability to determine a dynamic and/or day-of schedule for the use of the EV battery capacity, to thereby accommodate changes of the live market and stochasticity of EV properties.

Still another benefit can be an ability to provide good classification accuracy for prediction of a next best action (e.g., a fleet-level solution) at a disaggregated vehicle level of information for a fleet of EV vehicles. This can be provided through the use of one or more covariant quantum kernels based on a set of aggregated features corresponding to an aggregated fleet level of information.

## DESCRIPTION OF THE DRAWINGS

FIG. 1 illustrates a block diagram of an example, non-limiting system that can provide a process to determine a framework for power grid compensation using EV bidirectional charging, in accordance with one or more embodiments described herein.

FIG. 2 illustrates a block diagram of another example, non-limiting system that can provide a process to determine a framework for power grid compensation using EV bidirectional charging, in accordance with one or more embodiments described herein.

FIG. 3 illustrates a block diagram of a quantum system that can be employed in connection with the non-limiting system of FIG. 2, in accordance with one or more embodiments described herein.

FIG. 4 illustrates a schematic diagram of a vehicle to grid (V2G) system that can be controlled, in accordance with one or more embodiments described herein.

FIG. 5A illustrates a flow diagram of one or more processes that can be performed by the non-limiting system of FIG. 2, in accordance with one or more embodiments described herein.

FIG. 5B illustrates a flow diagram of one or more inputs and/or outputs that can be employed, generated and/or constructed by the non-limiting system of FIG. 2, in accordance with one or more embodiments described herein.

FIG. 6 illustrates an exemplary solver algorithm that can be employed by the non-limiting system of FIG. 2, in accordance with one or more embodiments described herein.

FIG. 7 illustrates an exemplary disaggregating/unpacking algorithm that can be employed by the non-limiting system of FIG. 2, in accordance with one or more embodiments described herein.

FIG. 8 an exemplary prediction algorithm that can be employed by the non-limiting system of FIG. 2, in accordance with one or more embodiments described herein.

FIG. 9 illustrates a flow diagram of one or more processes that can be performed by the non-limiting system of FIG. 2, to determine dynamic scheduling of electric vehicle bidirectional charging, and/or to maintain a vehicle-to-grid system, in accordance with one or more embodiments described herein.

FIG. 10 illustrates another flow diagram of one or more processes that can be performed by the non-limiting system of FIG. 2, to determine dynamic scheduling of electric vehicle bidirectional charging, and/or to maintain a vehicle-to-grid system, in accordance with one or more embodiments described herein.

FIG. 11 illustrates a continuation of the flow diagram of FIG. 10 of one or more processes that can be performed by the non-limiting system of FIG. 2, in accordance with one or more embodiments described herein.

FIG. 12 illustrates a block diagram of an example, non-limiting, computer environment in accordance with one or more embodiments described herein.

DETAILED DESCRIPTION

The following detailed description is merely illustrative and is not intended to limit embodiments and/or application or utilization of embodiments. Furthermore, there is no intention to be bound by any expressed or implied information presented in the preceding Summary section, or in the Detailed Description section. One or more embodiments are now described with reference to the drawings, wherein like reference numerals are utilized to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

In practice, a power supply entity can commit a power quantity to a day-ahead electricity market (DAM) to meet their customers' needs. The amount of energy a power supply entity buys can be based on a demand forecast. This is because an exact amount of electricity that customers will demand is not known in advance (e.g., it is subjective on a per customer basis). Nonetheless, a power supply entity must deliver the amount of energy requested by its customers to avoid events such as blackouts. When the demand is higher than the energy bought in the DAM, a power supply entity has to buy energy in the live markets, such as an intraday electricity market (IDM). That is, where the power supply entity fails to provide the committed power quantity, it must purchase a supplemental power quantity on an intraday electricity market (IDM). This supplemental power quantity to purchase can be undesirably expensive. Further, due to price fluctuations of the IDM, the corresponding expense can be difficult to predict, therefore negatively affecting both short term and long term planning and financials for the power supply entity.

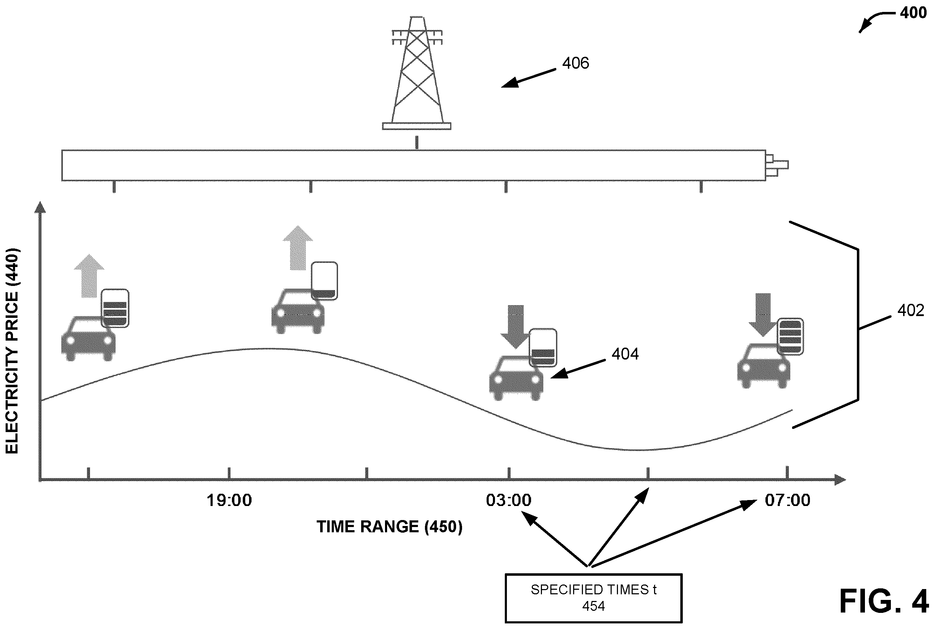

Accordingly, looking to the exemplary schematic 400 of FIG. 4, there is a tradeoff between buying cheaper energy in the DAM with coarse forecasts or buying expensive energy in the IDM with a better forecast of the demand. This tradeoff can apply to any electricity use by a customer, but EV use by customers is particularly relevant herein due to the use of an EV to use electricity from the power grid through charging and also to provide electricity to the power grid through discharging. That is, a strategic determination can be made by a power supply entity to choose between DAM market operations relying on forecasts and/or engaging in energy transactions on the IDM where prices may exhibit greater fluctuations than on the DAM market. Indeed, IDM prices (e.g., represented by electricity price 440 at the y-axis of the schematic 400) can fluctuate significantly throughout a day (e.g., represented by a time range 450 at the x-axis of the schematic 400), requiring dynamic, real-time adjustments to efficiently schedule the charging and discharging relative to the power grid. This means that the problem is often tackled regularly (e.g., every 15 minutes or at a specified frequency that can be dynamically adjustable) to adapt to changing market conditions.

Such tight temporal constraints can become increasingly difficult to manage, particularly when dealing with a large number of EVs using the power grid. Further adding to the difficulty, EVs can connect to and/or disconnect from the grid without notice, which can increase a burden on a power supply entity to account for this unpredictable behavior. In sum, the goal of a power supply entity can be to meet the customers' demand while minimizing the cost of buying energy in the different markets.

To account for one or more deficiencies of existing frameworks for compensating a vehicle-to-grid (V2G) system, the one or more embodiments described herein can generally automatically determine a framework for power grid compensation using EV bidirectional charging. That is, through connection of an EV to a power grid, using V2G system, a difference in power available to supply and committed power quantity can be at least partially accounted for. This can include compensating for a power quantity deficit, being a negative differential from the committed power quantity, using electricity input from one or more EVs to the power grid and/or use of power oversupply, being a positive differential from the committed power quantity, by one or more EVs. That is, one or more embodiments described herein can account for both overloading and underutilization of a V2G.

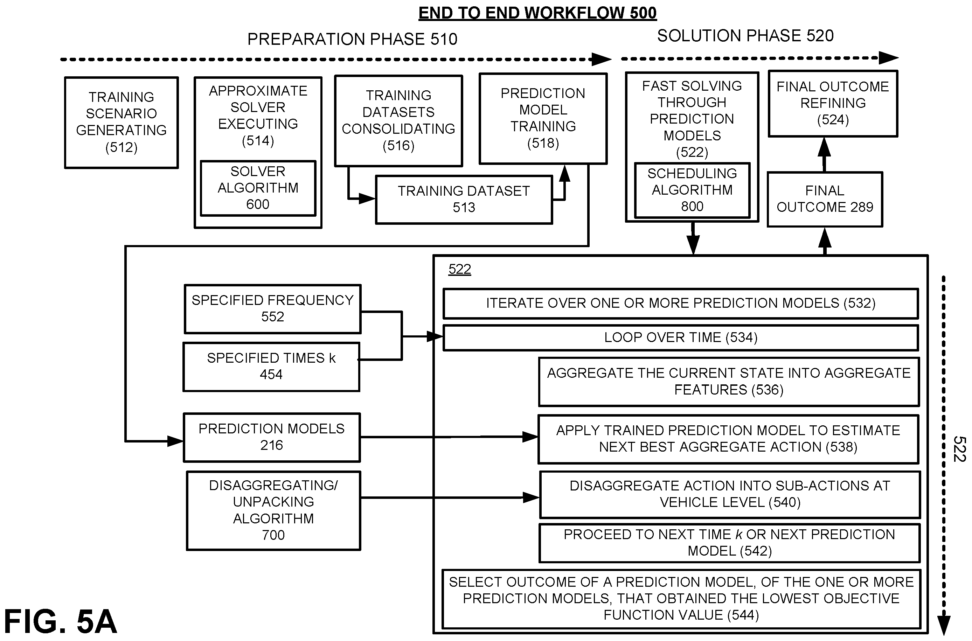

Generally, one or more embodiments described herein can provide an end-to-end workflow to train and/or to employ a fast solver for the aforementioned V2G problem. Turning briefly to FIG. 5A, an exemplary end-to-end workflow 500 can comprise a preparation phase 510 and a solution phase 520, where the solution phase 520 can be employed at one or more specified frequencies (e.g., every 15 minutes over a specified time range) and/or on demand. The preparation phase 510 can comprise training scenario generation 512, an approximate solver execution 514, consolidation 516 of one or more training datasets, and/or training 518 of one or more prediction models. The solution phase 520 can comprise fast solving step 522 through employment of the one or more trained prediction models and/or solution refining 524.

Relative to EV use corresponding to a power grid, an approximate solver employed in the preparation phase 510 can be based on known EV fleet aggregation and/or disaggregation. As used herein, the term "aggregation" corresponds to a providing a solution that is applicable to an EV fleet as a whole, with the term "disaggregation" corresponding to decomposition of the aggregated solution into sub-solutions applicable to sub-groups of EVs of a fleet and/or to individual EVs of a fleet.

In one or more embodiments, the prediction models can employ classical and/or quantum methods. Regarding use of a quantum system, the training can employ one or more multi-class classifiers that can be based on and/or employ one or more covariant quantum kernels (e.g., CQKs). Operation of a quantum-based prediction model can employ use of one or more quantum systems to calculate measurements that can be employed by a classical system to determine a prediction, such as of a multi-class classification. In one or more embodiments, an output of a prediction model can be a next best solution (e.g., in time) at a fleet level of granularity, also referred to herein as a fleet-level solution.

As a result therefrom, a schedule can be generated by the one or more embodiments described herein, where the schedule details a quantity of EVs, or even one or more particular EVs, that can employ bidirectional charging (e.g., discharged and/or charged) in accordance with a set of optimal timings. The schedule can be employed by a power supply entity to better understand and/or provide for commitment volumes on the DAM and/or provide for fulfillment of commitments through dynamic EV charge/discharge scheduling over a corresponding vehicle-to-grid system (e.g., V2G), thereby at least partially avoiding use of an IDM, lessening reliance on IDMs, meeting and/or attempting to meet a DAM commitment, etc.

As a result, the one or more embodiments described herein can facilitate use of clean energy, improved power grid stability, incentivization of EV owners to save money, and/or addressing of real-time (e.g., dynamic) challenges that change over time, such as every 15 minutes based on a 15 minute calculation schedule. It is noted that any dynamic frequency can be employed, with the frequency changing at any specified adjustment frequency. Usage of clean energy can be facilitated where a V2G can allow for storing of extra energy from renewable sources, such as solar and wind power, helping to use more clean energy when needed most. Improved power grid stability can be facilitated where V2G technology helps to keep the power grid stable by letting electric cars give power back when it is needed and take power away when demand is low. Incentivization can come into play with V2G EV owners getting paid for keeping vehicles connected and for allowing multiple charge/discharge cycles while the vehicle is connected. EV owners (e.g., customers) and/or power supply entities that provide electricity can save money, such as via applicable discounts. Further, as mentioned, V2G issues can be inherently dynamic, as prediction of the number of connected EVs and their respective charge states and/or charge levels, along with energy demand and production, can only be estimated with less than perfect accuracy.

Regarding the term "real-time," an urgency of addressing the V2G problem using the one or more embodiments described herein can be high based on a need to act within a limited time frame (e.g., about 15 or fewer minutes, about 10 or few minutes, or about 5 or fewer minutes, to provide only a few examples). As mentioned above, IDM prices can fluctuate significantly through a given day, causing a need for real-time (e.g., dynamic and changing over a time range) adjustments to efficiently schedule charging and/or discharging of EV vehicles connectable to a V2G system. This can mean that the problem should be tackled regularly to adapt to changing market conditions.

Such solution desirably addresses a set of considerations that can comprise adherence to site constraints and/or reduction of charging cycles. Site constraints can comprise capacity of charging stations and grid infrastructure limitations. Grid infrastructure limitations can comprise power cable limitations, such as ability to charge only a maximum amount of EV batteries or EVs simultaneously. Adherence to site constraints can comprise taking such site constraints into account to ensure smooth operation of a power grid infrastructure. Reducing a number of charging cycles for any EV battery can prolong the respective lifespan and maximize respective efficiency of the EV battery over timer. It is noted that existing approaches for V2G management do not scale well relative to these considerations, and thus the next generation energy technologies described herein can provide for improvement in the real world relative to power being made available over various time ranges, and relative to cost of such power.

Further, the one or more embodiments described herein can provide for solutions of scale. That is, the one or more embodiments described herein can function relative to a V2G having millions or more customers, such as comprising millions or more EVs. In one or more embodiments, the frameworks described herein can be employed relative to 2 or more V2Gs at least partially at a same time as one another, where each V2G can employ one or more fleets, and/or where different frequencies of predictions can be provided for different V2Gs and/or even for a same V2G. Additionally, and/or alternatively, in one or more cases, the frameworks described herein can provide solver runtimes that can scale linearly relative to increasing numbers of EVs to which the frameworks are applied.

Further, in one or more cases, an execution of one or more frameworks described herein can be employed to warm-start an existing framework. As used herein, the term "warm-start" can apply to use of data from the one or more embodiments described herein to start one or more operations of such existing framework while other operations of the existing framework are still initializing.

As used herein, the term "data" can comprise metadata.

As used herein, the terms "entity," "requesting entity," and "user entity" can refer to a machine, device, component, hardware, software, smart device, party, organization, individual and/or human.

One or more embodiments are now described with reference to the drawings, where like referenced numerals are used to refer to like elements throughout. In the following description, for purposes of explanation, numerous specific details are set forth to provide a more thorough understanding of the one or more embodiments. It is evident in various cases, however, that the one or more embodiments can be practiced without these specific details.

Further, it should be appreciated that the embodiments depicted in one or more figures described herein are for illustration only, and as such, the architecture of embodiments is not limited to the systems, devices and/or components depicted therein, nor to any particular order, connection and/or coupling of systems, devices and/or components depicted therein.

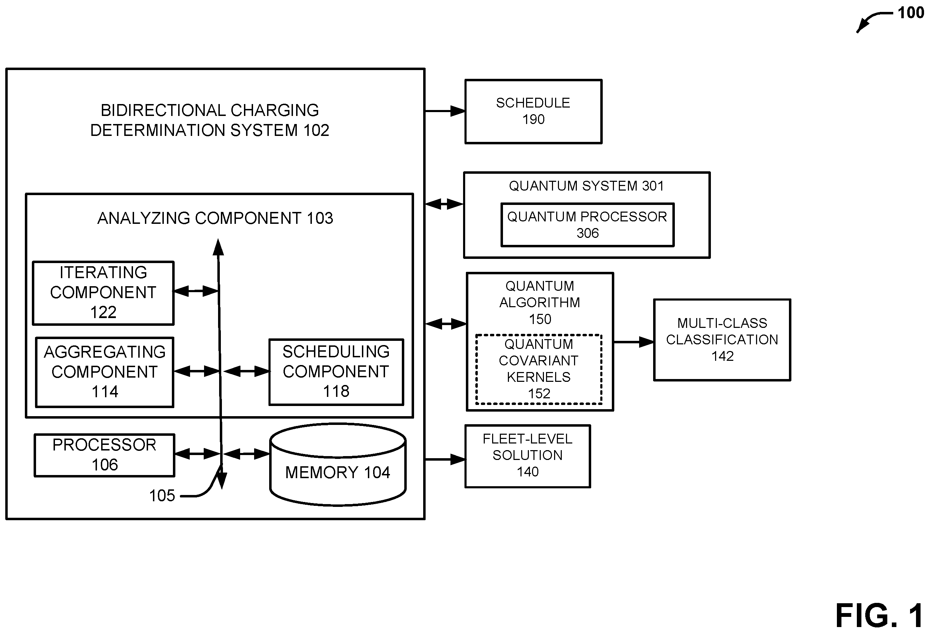

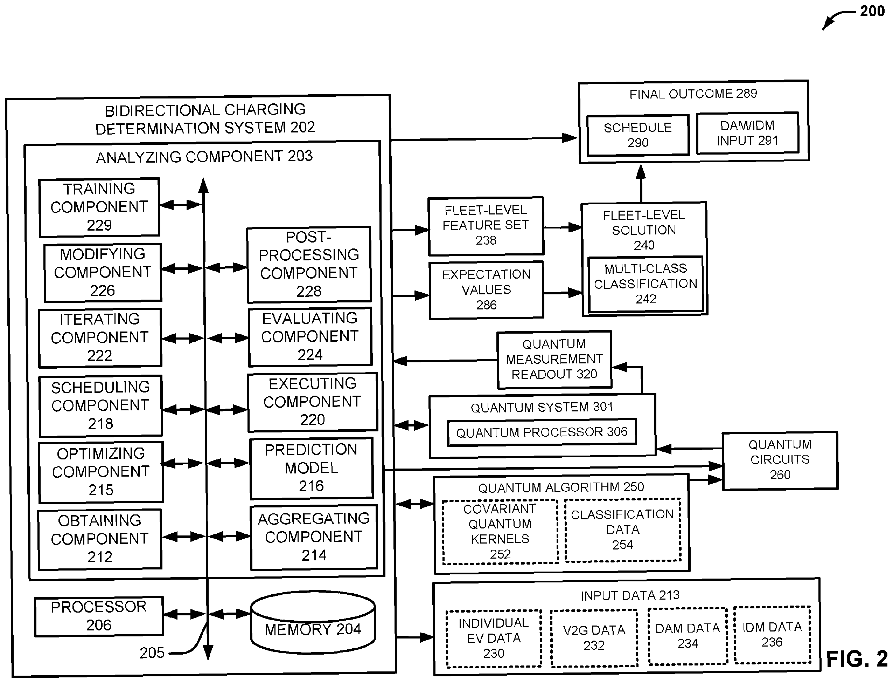

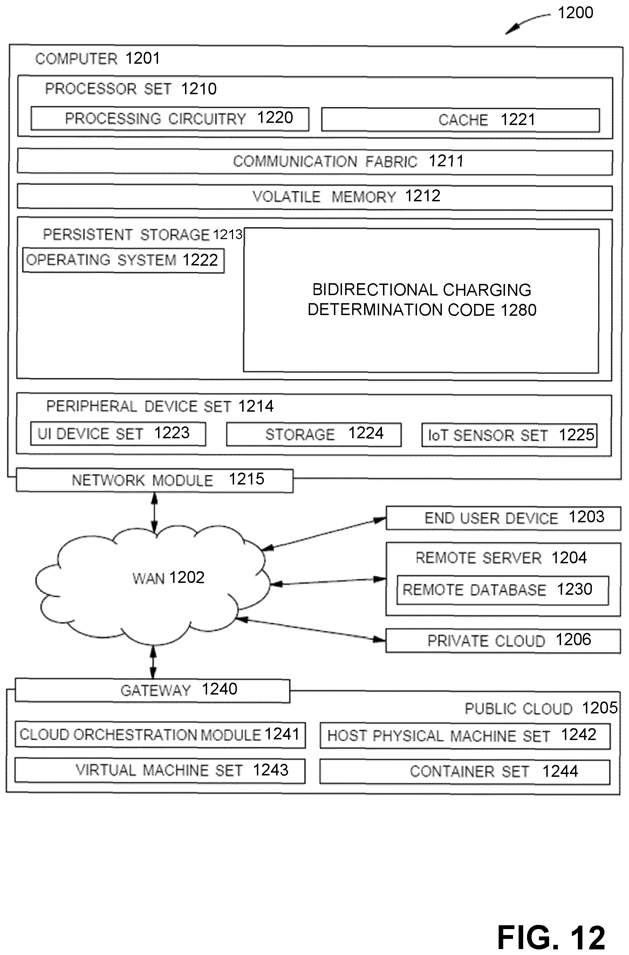

For example, in one or more embodiments, the non-limiting system 100 (FIG. 1) or the non-limiting system 200 (FIG. 2) can further comprise one or more computer and/or computing-based elements described herein with reference to a computing environment, such as the computing environment 1200 illustrated at FIG. 12. In one or more described embodiments, computer and/or computing-based elements can be used in connection with implementing one or more of the systems, devices, components and/or computer-implemented operations shown and/or described in connection with FIG. 1, FIG. 2 and/or with one or more other figures described herein.

Turning now in particular to one or more figures, and first to FIG. 1, the figure illustrates a block diagram of an example, non-limiting system 100 that can facilitate generation of a solution for power grid compensation using EV bidirectional charging.

That is, the non-limiting system 100 can comprise a bidirectional charging determination system 102. It is noted that the bidirectional charging determination system 102 is described only briefly, relative to FIG. 1, to provide but a lead-in to description of a more complex and/or more expansive bidirectional charging determination system 202 as illustrated at FIG. 2. That is, further detail regarding processes that can be performed by one or more embodiments described herein will be provided below relative to the non-limiting system 200 of FIG. 2.

Still referring to FIG. 1, and also again to FIG. 4, the bidirectional charging determination system 102 can comprise at least a memory 104, bus 105, processor 106, aggregating component 114, scheduling component 118 and/or iterating component 122. Using these components and the quantum system 301, the bidirectional charging determination system 102 can provide for determination of how to employ a fleet 402 of electric vehicles (EVs) 404 for satisfying at least a portion of energy demand (e.g., electricity demand) of a V2G system 506. This employment can comprise charging of an EV 404 from the V2G system 406, discharging of an EV 404 to the V2G system 406 and/or neither (e.g., no bidirectional charging of an EV 404).

Generally, the aggregating component 114 can generate a fleet-level solution 140 for maintaining the vehicle-to-grid (V2G) system 406 by the fleet 402 of electric vehicles (EVs) 404. A fleet-level solution 140 is one which comprises information at a high granularity applicable to the fleet 402 as a whole, but lacking lower granularity details for one or more sub-groups of EVs 404 of the fleet 402 and/or for one or more individual EVs 404 of the fleet 402.

In response to the determining of the fleet-level solution 140, the scheduling component 118 can construct a schedule 190 for bidirectional charging of a portion of the fleet 402 by disaggregating the fleet-level solution 140 based on multi-class classification 142 resulting from an execution of a quantum algorithm 150, based on a covariant quantum kernel 152 (e.g., that employs one or more covariant quantum kernels 152), on a quantum system 301.

In one or more embodiments, the aggregating component 114 and/or the scheduling component 118 can be implemented independently, without the other of the aggregating component 114 and/or the scheduling component 118. Additionally and/or alternatively, the aggregating component 114 and/or the scheduling component 118 can be comprised by a high-level analyzing component 103, the high-level analyzing component 103 can perform one or more of the above-described functions of the aggregating component 114 and/or the scheduling component 118, and/or the aggregating component 114 and/or the scheduling component 118 can be omitted with the high-level analyzing component 103 performing one or more of the above-described functions of the omitted aggregating component 114 and/or the scheduling component 118.

In general, the non-limiting system 100 can employ any suitable method of communication (e.g., electronic, communicative, internet, infrared, fiber, etc.) to provide communication between the classical system 102 and the quantum system 301.

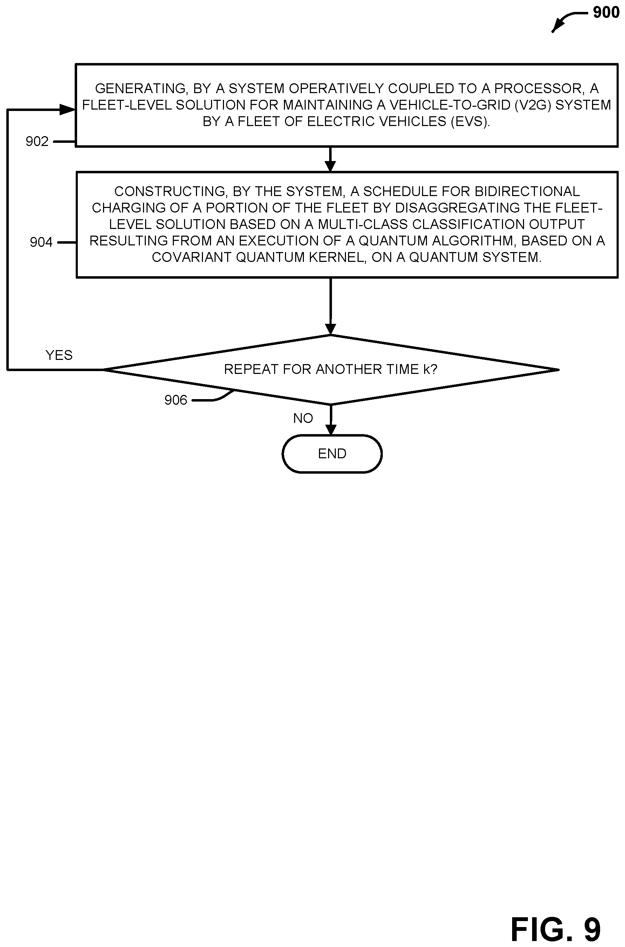

As a summary, referring next briefly to FIG. 9, illustrated is a flow diagram of an example, non-limiting method 900 that can provide a process to determine dynamic scheduling of electric vehicle bidirectional charging, and/or to maintain a vehicle-to-grid system, in accordance with one or more embodiments described herein, such as the non-limiting system 100 of FIG. 1. Repetitive description of like elements and/or processes employed in respective embodiments is omitted for sake of brevity.

At 902, the non-limiting method 900 can comprise generating, by a system operatively coupled to a processor (e.g., aggregating component 114 coupled to processor 106), a fleet-level solution (e.g., fleet-level solution 140) for maintaining a vehicle-to-grid (V2G) system (e.g., V2G system 406) by a fleet (e.g., fleet 402) of electric vehicles (EVs) (e.g., EVs 404).

At 904, the non-limiting method 900 can comprise constructing, by the system (e.g., scheduling component 118), a schedule (e.g., schedule 190) for bidirectional charging of a portion of the fleet by disaggregating the fleet-level solution based on a multi-class classification (e.g., multi-class classification 142) resulting from an execution of a quantum algorithm (e.g., quantum algorithm 150), based on a covariant quantum kernel (e.g., a covariant quantum kernel 152), on a quantum system (e.g., quantum system 301).

At 906, the non-limiting method 900 can comprise determining, by the system (e.g., iterating component 122), whether construction of the schedule is to be repeated for an additional time *k*. If yes, the non-limiting method 900 can proceed back to step 902. If not, the non-limiting method 900 can end.

Turning next to FIG. 2, a non-limiting system 200 is illustrated that can comprise a bidirectional charging determination system 202. Repetitive description of like elements and/or processes employed in respective embodiments is omitted for sake of brevity. Description relative to an embodiment of FIG. 1 can be applicable to an embodiment of FIG. 2. Likewise, description relative to an embodiment of FIG. 2 can be applicable to an embodiment of FIG. 1.

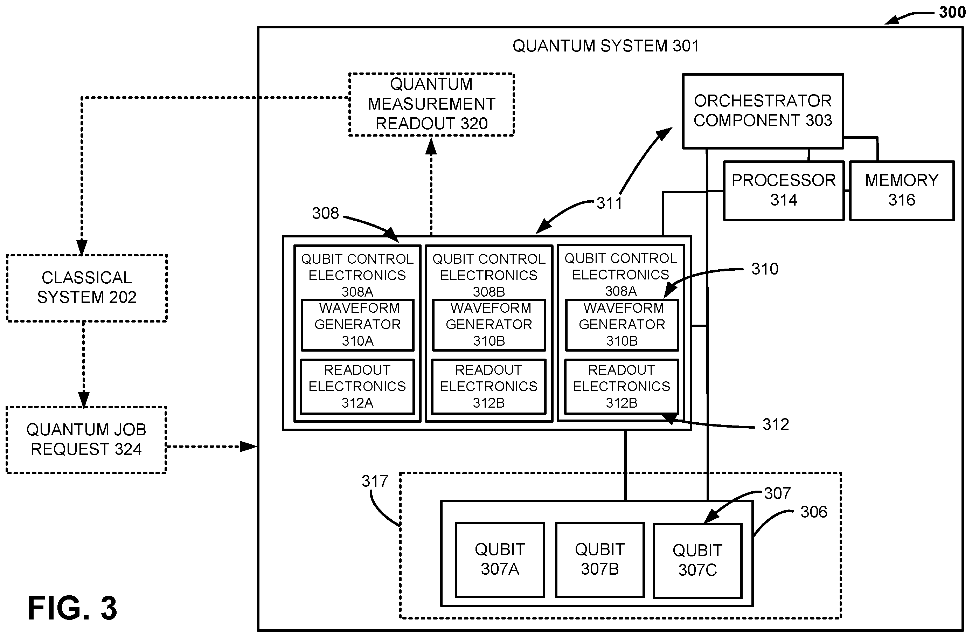

Generally, the non-limiting system 200 can facilitate a process to determine dynamic scheduling of electric vehicle bidirectional charging, which can employ the quantum system 301 (FIG. 3).

For example, the bidirectional charging determination system 202 can generate a linearly scalable solver for an optimization problem comprising scheduling charge/discharge of electric vehicles connected to a power grid, e.g., a V2G problem. To achieve this, the bidirectional charging determination system 202 can generate one or more realistic, input scenarios for the V2G problem, approximate a solution for one or more of the scenarios by employing one or more appropriate solvers, consolidate and/or aggregate the one or more solutions of the one or more scenarios into a "training dataset" aggregated at fleet-level instead of vehicle-level, employ the training dataset to train one or more prediction models, each of which can determine a best action at a given time at fleet level, given a state at that time and given one or more other relevant parameters.

In one or more embodiments, the solver can be and/or can comprise a particular version of an approximate dynamic programming method which can be characterized by a restriction of a state space and an action space in coherence with aggregation rules that consolidate EVs into fleets, and an application of a disaggregation procedure at each time iteration to provide feasibility of the solution at vehicle level.

In one or more embodiments, the prediction model can be and/or can comprise a classical model, a machine learning (ML) model, a quantum-based model and/or a ML quantum-based model. The solver is not constrained by the model architecture. In a quantum case the quantum-based model or ML quantum-based model can be a multi-class classification model based on one or more covariant quantum kernels.

In practice, the one or more prediction models can be employed relative to a DAM, as a solver, by, for each prediction model, looping over time in a time horizon, aggregating the current state into aggregate features, applying the prediction model to estimate the next best aggregate action at a fleet level, disaggregating the action into a feasible action at a vehicle level, and/or selecting an outcome of a prediction model which obtained a lowest objective function.

In one or more embodiments, the selected outcome, or one or more non-selected outcomes, can be employed to warm-start another round of fast solution. For example, the fast solution from an efficient but time-constrained approach as described herein can be employed to warm-start another inefficient and non-time-constrained solver (e.g., based on an existing framework) to allow for a solution providing additional details, lower granularity details, and/or lower objective function, beyond those of the fast solution.

In one or more embodiments, a prediction model can predict a next best action at fleet level (e.g., a fleet-level solution), thus accelerating the construction of the final output (e.g., final outcome 289) dramatically, at the expense of an approximation. That is, it can be convenient to focus on a small subset of actions. That is, in one or more embodiments, the prediction model 216 can employ "extreme actions" (e.g., charge all, do nothing, or discharge all), as this can simplify data generation and/or model training, while still providing satisfactory accuracy in the end-to-end solver. Therefore, in one or more embodiments, the prediction can be defined as a classification problem of defining an optimal action in a small set, given a status as the collection of features. In one or more other embodiments, covariant quantum kernels (e.g., and thus the quantum system 301) can be employed to provide satisfactory classification accuracy after data alignment, such as when data has an appropriate group structure. Use of one or more covariant quantum kernels can lead to a provable separation between quantum and classical learners for specific problems.

In one or more embodiments, the bidirectional charging determination system 202 can direct use of a solver (e.g., aggregating component, optimizing component and/or scheduling component) for defining volumes to be traded in a DAM, for optimizing the volumes that can be sold to the grid and/or that must be bought from the grid at each time, for considering the storage capacity of a corresponding fleet, and/or for defining the optimal schedule of each vehicle in the fleet to account for a committed volume while minimizing costly intra-day energy purchases using the IDM.

Turning now in particular to the non-limiting system 200 of FIG. 2, one or more communications between one or more components of the non-limiting system 200 can be provided by wired and/or wireless means including, but not limited to, employing a cellular network, a wide area network (WAN) (e.g., the Internet), and/or a local area network (LAN). Suitable wired or wireless technologies for supporting the communications can include, without being limited to, wireless fidelity (Wi-Fi), global system for mobile communications (GSM), universal mobile telecommunications system (UMTS), worldwide interoperability for microwave access (WiMAX), enhanced general packet radio service (enhanced GPRS), third generation partnership project (3GPP) long term evolution (LTE), third generation partnership project 2 (3GPP2) ultra-mobile broadband (UMB), high speed packet access (HSPA), Zigbee and other 802.XX wireless technologies and/or legacy telecommunication technologies, BLUETOOTH®, Session Initiation Protocol (SIP), ZIGBEE®, RF4CE protocol, WirelessHART protocol, 6LoWPAN (Ipv6 over Low power Wireless Area Networks), Z-Wave, an advanced and/or adaptive network technology (ANT), an ultra-wideband (UWB) standard protocol and/or other proprietary and/or non-proprietary communication protocols.

The bidirectional charging determination system 202 can be associated with, such as accessible via, a cloud computing environment.

The bidirectional charging determination system 202 can comprise a plurality of components. The components can comprise a memory 204, processor 206, bus 205, obtaining component 212, aggregating component 214, optimizing component 215, prediction model 216, scheduling component 218, executing component 220, iterating component 222, evaluating component 224, modifying component 226, post-processing component 228 and/or training component 229. Using these components, and optionally using operation of the quantum system 301, the non-limiting system 200 generally can generate training scenarios, apply an approximation solver, consolidate training datasets, train one or more prediction models which can comprise training a covariant quantum kernel, generate an executable framework for V2G use, employ the framework for one or more fast solutions, and/or execute refinement (e.g., polishing) of the one or more fast solutions.

In one or more embodiments, the obtaining component 212, aggregating component 214, optimizing component 215, prediction model 216, scheduling component 218, executing component 220, iterating component 222, evaluating component 224, modifying component 226, post-processing component 228 and/or training component 229 can operate at the classical system 202 of the non-limiting system 200. Differently, one or more quantum circuits (e.g., quantum circuits 260) can be executed by the quantum system 301. In one or more other embodiments, one or more processes performed by any one or more of the obtaining component 212, aggregating component 214, optimizing component 215, prediction model 216, scheduling component 218, executing component 220, iterating component 222, evaluating component 224, modifying component 226, post-processing component 228 and/or training component 229 can be performed at the quantum system 301.

Discussion first turns briefly to the processor 206, memory 204 and bus 205 of the bidirectional charging determination system 202. For example, in one or more embodiments, the bidirectional charging determination system 202 can comprise the processor 206 (e.g., computer processing unit, microprocessor, classical processor, quantum processor and/or like processor). In one or more embodiments, a component associated with bidirectional charging determination system 202, as described herein with or without reference to the one or more figures of the one or more embodiments, can comprise one or more computer and/or machine readable, writable and/or executable components and/or instructions that can be executed by processor 206 to provide performance of one or more processes defined by such component and/or instruction. In one or more embodiments, the processor 206 can comprise the obtaining component 212, aggregating component 214, optimizing component 215, prediction model 216, scheduling component 218, executing component 220, iterating component 222, evaluating component 224, modifying component 226, post-processing component 228 and/or training component 2292.

In one or more embodiments, the bidirectional charging determination system 202 can comprise the computer-readable memory 204 that can be operably connected to the processor 206. The memory 204 can store computer-executable instructions that, upon execution by the processor 206, can cause the processor 206 and/or one or more other components of the bidirectional charging determination system 202 (e.g., obtaining component 212, aggregating component 214, optimizing component 215, prediction model 216, scheduling component 218, executing component 220, iterating component 222, evaluating component 224, modifying component 226, post-processing component 228 and/or training component 229) to perform one or more actions. In one or more embodiments, the memory 204 can store computer-executable components (e.g., obtaining component 212, aggregating component 214, optimizing component 215, prediction model 216, scheduling component 218, executing component 220, iterating component 222, evaluating component 224, modifying component 226, post-processing component 228 and/or training component 229).

The bidirectional charging determination system 202 and/or a component thereof as described herein, can be communicatively, electrically, operatively, optically and/or otherwise coupled to one another via a bus 205. Bus 205 can comprise one or more of a memory bus, memory controller, peripheral bus, external bus, local bus, quantum bus and/or another type of bus that can employ one or more bus architectures. One or more of these examples of bus 205 can be employed.

In one or more embodiments, the bidirectional charging determination system 202 can be coupled (e.g., communicatively, electrically, operatively, optically and/or like function) to one or more external systems (e.g., a non-illustrated electrical output production system, one or more output targets and/or an output target controller), sources and/or devices (e.g., classical and/or quantum computing devices, communication devices and/or like devices), such as via a network. In one or more embodiments, one or more of the components of the bidirectional charging determination system 202 and/or of the non-limiting system 200 can reside in the cloud, and/or can reside locally in a local computing environment (e.g., at a specified location).

In general, the non-limiting system 200 can employ any suitable method of communication (e.g., electronic, communicative, internet, infrared, fiber, etc.) to provide communication between the bidirectional charging determination system 202 and the quantum system 301.

In addition to the processor 206 and/or memory 204 described above, the bidirectional charging determination system 202 can comprise one or more computer and/or machine readable, writable and/or executable components and/or instructions that, when executed by processor 206, can provide performance of one or more operations defined by such component and/or instruction.

Discussion next turns to the additional components of the bidirectional charging determination system 202 (e.g., obtaining component 212, aggregating component 214, optimizing component 215, prediction model 216, scheduling component 218, executing component 220, iterating component 222, evaluating component 224, modifying component 226, post-processing component 228 and/or training component 229).

First, it is noted that in one or more embodiments, the obtaining component 212, aggregating component 214, optimizing component 215, prediction model 216, scheduling component 218, executing component 220, iterating component 222, evaluating component 224, modifying component 226, post-processing component 228 and/or training component 229 can be implemented independently, without one or more other of the obtaining component 212, aggregating component 214, optimizing component 215, prediction model 216, scheduling component 218, executing component 220, iterating component 222, evaluating component 224, modifying component 226, post-processing component 228 and/or training component 229. Additionally and/or alternatively, the obtaining component 212, aggregating component 214, optimizing component 215, prediction model 216, scheduling component 218, executing component 220, iterating component 222, evaluating component 224, modifying component 226, post-processing component 228 and/or training component 229 can be comprised by a high-level analyzing component 203, one or more of the below-described functions of the obtaining component 212, aggregating component 214, optimizing component 215, prediction model 216, scheduling component 218, executing component 220, iterating component 222, evaluating component 224, modifying component 226, post-processing component 228 and/or training component 229 can be performed by the high-level analyzing component 203, and/or the obtaining component 212, aggregating component 214, optimizing component 215, prediction model 216, scheduling component 218, executing component 220, iterating component 222, evaluating component 224, modifying component 226, post-processing component 228 and/or training component 229 can be omitted. In the latter omission case, the high-level analyzing component 203 can instead perform one or more of the below-described functions of the one or more omitted obtaining component 212, aggregating component 214, optimizing component 215, prediction model 216, scheduling component 218, executing component 220, iterating component 222, evaluating component 224, modifying component 226, post-processing component 228 and/or training component 229.

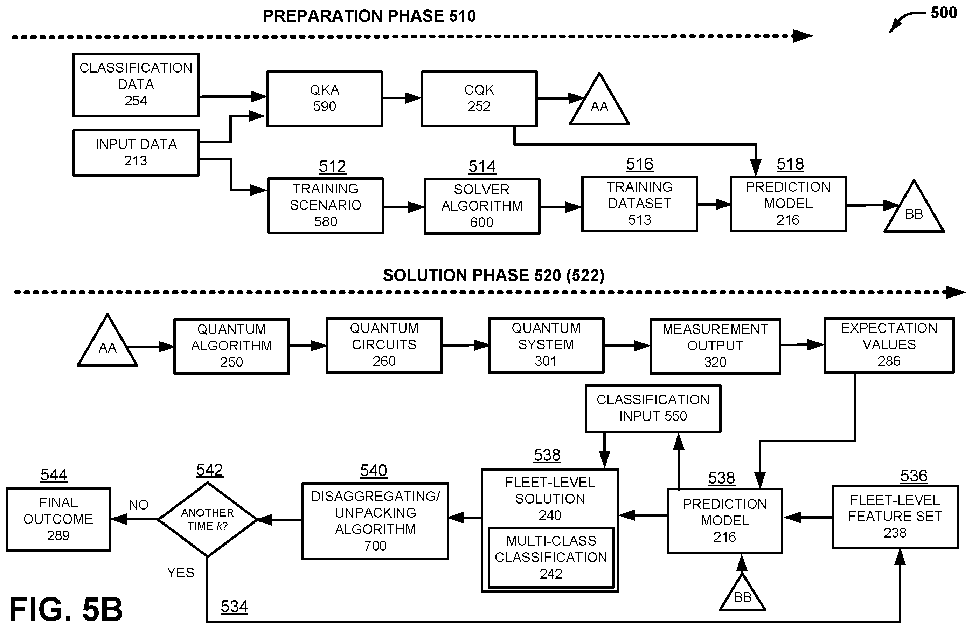

Direction now turns again to FIG. 5A, illustrating the workflow 500 of processes that can be performed by the bidirectional charging determination system 202, and also to FIG. 5B, illustrating one or more inputs and/or outputs of the workflow 500, and also still to FIG. 2. Discussion is provided first relative to the obtaining component 212, then specifically to the preparation phase 510, and then relative to the solution phase 520.

At a start of either the preparation phase 510 and/or the solution phase 520, the obtaining component 212 generally can find, locate, determine, request, download, read and/or otherwise obtain information (e.g., data and/or metadata) relating to a request for maintaining a vehicle-to-grid (V2G) system 406 by a 402 of electric vehicles (EVs) 404. This can be due to a scheduled desire (e.g., by a user entity) or on-demand desire (e.g., by a user entity) to generate a schedule 290 for the maintaining of the V2G system 406, such as in view of a determined specified frequency 552 for continuous schedule regeneration, and/or due to a desire (e.g., by a user entity) to reduce underutilization of the V2G system 406 and/or to address increased utilization (e.g., based on increased V2G demand data 232 defining predicted or actual demand) of the V2G system 406. The specified frequency 552 can be specified by a user entity. Specification by the user entity can be based upon use of a computing device by the user entity, which computing device is communicatively couplable to and/or accessible by the non-limiting system 200. That is, this obtaining of the input data 213 can be performed not only at a start of a phase 510, 520, but also at any suitable frequency, such as corresponding to the specified frequency 552 and/or corresponding to an obtaining frequency that is different from the specified frequency. In one or more embodiments, obtaining of the input data 213 can be on demand, such as upon trigger from a user entity (e.g., user entity and/or power supply entity) using a computing device to communicate with the non-limiting system 200.

Likewise, in one or more cases, the obtaining component 212 can find, locate, determine, request, download, read and/or otherwise obtain information (e.g., data and/or metadata) relating to one or more individual EVs, sub-groups of EVs or fleets of EVs. This information can comprise location of an EV, location of an EV relative to a V2G access point, charge state of an EV, charge cycling information for an EV, battery health state of an EV, type of battery (e.g., in a range of about 40 kWh to about 100 kWh), acceptance of an EV user to perform bidirectional charging at request of a V2G control entity (e.g., power supply entity), and/or the like. As noted above, an acceptance of an EV user to perform bidirectional charging at a request of a V2G control entity can comprise receipt of a discount, whether on future charging and/or related to discounted near-term charging to address underutilization of the respective V2G system. It is noted that any one or more of these information aspects can additionally and/or alternatively be obtained relative to one or more sub-groups of EVs or fleets of EVs. As noted above, the term "bidirectional charging" can refer to either charging of an EV from a V2G system or discharging of an EV to a V2G system (e.g., increase of available power to the V2G system from the EV).

Additionally, and/or alternatively, in one or more cases, the obtaining component 212 can find, locate, determine, request, download, read and/or otherwise obtain individual EV data 230, V2G demand data 242, DAM data 234 and/or IDM data 236, such as at a set obtaining frequency. This can allow for use of most current (e.g., real-time) data by the one or more other components of the bidirectional charging determination system 202. The data can be obtained, such as be tracking outputs, reports, etc. from a DAM, IDM, V2G system 406 and/or individual EVs 404. In one or more cases, V2G system data can comprise information from all or a portion of a fleet 402 of EVs 404 of the fleet 402.

Turning now to the preparation phase 510 specifically, at a start of the preparation phase 510, the training component 229 can initially train the one or more prediction models 216 that are employed by the bidirectional charging determination system 202 in practice. For example, still referring to the preparation phase 510 of the workflow 500, such training can comprise training scenario generation 512, use of an approximate solver based on one or more generated training scenarios (step 514), consolidating of the training datasets based on the results of the approximate solver (step 516) resulting in a training dataset 513, and training (step 518) of a prediction model 216 based on the consolidating and using the training dataset 513.

Put another way, this training can comprise generation and use of one or more training datasets 513 relating to V2G use, V2G demand, DAM pricing, IDM pricing and/or the like. In one or more cases, a training dataset 513 can comprise aggregated fleet-level information, applicable to one or more fleets 402 of two or more EVs 404, and/or vehicle-level information, applicable to individual EVs 404. For example, a prediction model 216 can be trained to provide instructions for addressing a V2G demand, where the instructions can be provided at a sub-fleet level (e.g., sub-group of EVs, individual EVs, etc.) based on aggregated fleet-level information.

For example, scenario generation 512 can comprise generating, by the training component 229, one or more training scenarios 580 comprising fleet-level features of one or more fleets 402 and/or vehicle-level features of one or more EVs 404 (e.g., individual EV data 230). Such vehicle-level and/or fleet-level features can comprise initial and/or final charge, battery capacity, window of grid connection, location of an EV, location of an EV relative to a V2G access point, charge state of an EV, charge cycling information for an EV, battery health state of an EV, type of battery (e.g., in a range of about 40 kWh to about 100 kWh), acceptance of an EV user to perform bidirectional charging at request of a V2G control entity (e.g., power supply entity), and/or the like.

Scenario generation 512 additionally, and/or alternatively, can comprise features of length of the time horizon, business constraints due to physical limitations or business rules (such as site power capacity, battery lifecycle preservation, current grid configuration, etc.), and/or market features such as electricity prices and/or committed volumes.

At step 514, an approximate solver (e.g., of the training component 229) can be an existing framework, such as an interactive optimizer or a dynamic programming solver or an approximate dynamic programming solver. The training component 229 can comprise an aggregating sub-component that can employ, or itself can employ, an solver algorithm 600 to aggregate the one or more training scenarios 580 to obtain output (e.g., one or more unconsolidated feature sets) that can be employed for training dataset 513 consolidating at step 516. In one or more embodiments, the solver algorithm 600 output can comprise an aggregated training feature set that comprises feature data/metadata at a fleet-level of granularity and/or at a vehicle-level of granularity.

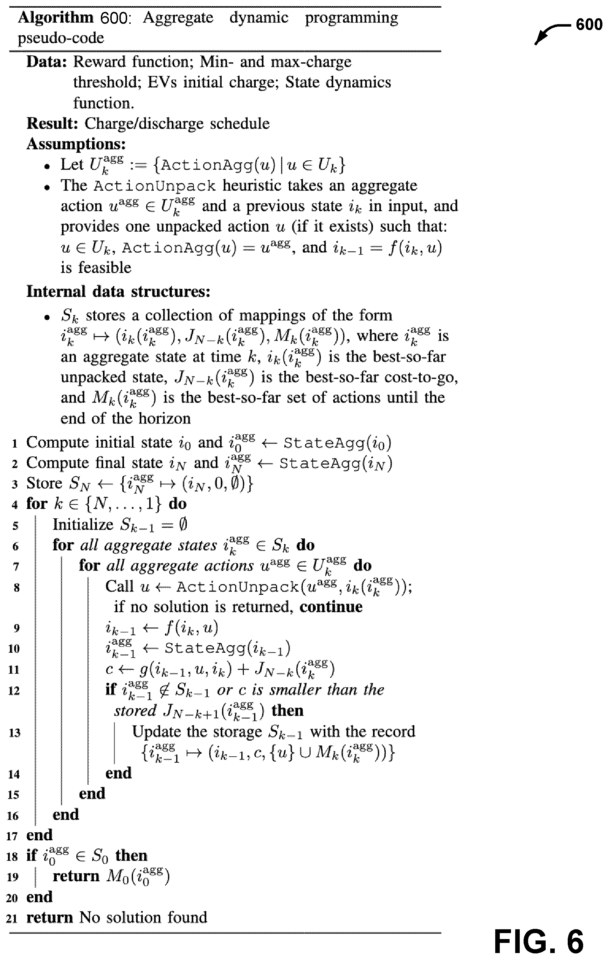

For example, turning to the solver algorithm 600 at FIG. 6, the solver algorithm 600 can be executed, using the various data 230, 232, 234 and/or 236 to output data for use at the consolidating step 516.

The solver algorithm 600 is described by a pseudocode in FIG. 6, in more generality, where for a case *StateAgg(i)* = ⟨*1, i*⟩ and *ActionAgg(u)* = ⟨*1, u*⟩.

At algorithm 600, $\mu_k$ is an action at time $k$, and therefore is vector indexed over EVs representing charge/-discharge amount. $U_k$ is a set of actions at time $k$, which is a discrete set of actions. Also, $i_k$ is a state at a time k, which is a vector indexed over EVs, containing states of charges of the EVs. The variable c with different indices is the value of the cost function being minimized by the solver algorithm 600. The cost function can be defined as $g(i_k, \mu_k, i_{k+1}) := \rho_k[\upsilon_k + \langle 1, \mu_k \rangle]^+$

Note that in the solver algorithm 600, $i_{k-1}^{\mathrm{agg}}$, g, and therefore c, may not depend on the specific unpacking, because they are functions of $i_k$ and $u^{agg}$ only. Consequently, it can be possible to unpack after verifying the condition of step 12, algorithm 600, for improved performance.

Further regarding the solver algorithm 600, an assumption is made that an unpacking heuristic returns (e.g., at most) one unpacked action and associated state. In principle, returned can be plural promising actions, which can be appended by the training component 229 all to an index $S_{k-1}$. In such case, $S_{k-1}$ is not indexed over $i_{k-1}^{agg}$, but rather an appropriate composite index. In an extreme case where the unpacking heuristic returns all feasible states, and the index of $S_{k-1}$ is $i_{k-1}$, an exact dynamic programming (DP) algorithm can be again obtained. With respect to variable of algorithm 600, $S_k$ stores a collection of mapping of a state (e.g., a state, cost function value, best set of actions, etc.), $i$ is a state, $T$ represents transposed, $M$ is a set of best actions thus far in the solver algorithm 600, $J$ is a cost function, and $N$ is a number of time periods.

Regarding an associated complexity *(case U = {-a, 0, a}):* the complexity can be analyzed in the simplified case where $U = \{-a, 0, a\}$ for some $a$ (e.g. $a = 10$), and the state is discretized consistently in steps of *a*. Namely, an EV can take states in $\{c_{min}, c_{min} + a, ..., c_{max}\}$ (e.g., {10, 20..., 100}). Then, aggregate states are valued in $\{c_{min}d, c_{min}d + a, ..., c_{max}d\}$. Therefore, the number of aggregate states scales as $\Theta(d)$. Similarly, aggregate actions are valued in $\{-ad, -ad + a, ..., ad\}$. Then, the number of aggregate actions is $\Theta(d)$.

Relative to algorithm 600, the *Action Unpack* heuristic can provide a feasible unpacked action, namely an action that does not violate any constraint at time k. Additionally, the unpacking chosen at time *k* can condition the ability to find feasible solutions for the unpacking in subsequent iterations, namely for time prior to *k*.

At the solver algorithm 600, considered are $ActionAgg(\mu_k) = 1^T \mu_k$, $StateAgg(i_k) = 1^T \mu_k$, and $ActionUnpack(\mu^{agg})$ being an unpacking heuristic that scales linearly with the number of EVs 404 of a fleet 402 being analyzed.

Considered can be two unpacking heuristics. In the basic heuristic, if the aggregate action requires discharging, the training component 229 can specify discharge of the vehicles with the highest charge, and vice versa. In the balanced heuristic, after satisfying the aggregate action, the remaining vehicles are balanced by discharging the most charged vehicles while charging the most discharged ones. In general, this can provide flexibility in scheduling previous time steps.

The unpacking heuristics defined scale as $\Theta(d)$. Overall, the algorithm complexity of algorithm 600 is $O(Nd^3)$.

In step 7, the solver algorithm 600 loops through all possible aggregate actions, *{ActionAgg(u) | u ∈ U_k}*. As a further heuristic, it can be possible to loop only in a subset $U_k$ made of promising actions. An example is taking $U_k^{agg}$ as the set of extreme actions (charge all, do nothing, discharge all), i.e. $U_k^{agg} = \{-ad, 0, ad\}$. In such case, the *ActionUnpack* heuristic must be allowed to modify the quantity prescribed by the aggregate action, in order to guarantee solution feasibility. The function can then be referred to as *ActionUnpackAdjust.* In other terms, *ActionUnpackAdjust* reads the three extreme actions as: charge as much as possible, preserve the current state as much as possible, discharge as much as possible. It can be possible to adapt the previous *ActionUnpack* to an *ActionUnpackAdjust* preserving a linear scaling, by essentially removing steps 13 to 15 in disaggregating algorithm 700.

If $U_k^{agg}$ does not scale with the number of EVs, like in the example of extreme actions, the complexity of the loop in step 7 can lower to $\Theta(1)$, implying that the overall algorithm costs $O(Nd^2)$.

At step 12 of algorithm 600, the preference criterion among two possible states having the same aggregate state, is simply the cost to go. A more sophisticated version can select also based on how promising the state is for future schedulability, as a subcriterion or as a weighted objective. This approach can be consistent with the balancing unpacking heuristic, as the 'good balance' could be accounted for, also in the state selection.

Next, at step 516, consolidation, by the training component 229, can comprise consolidation of one or more outputs of the solver algorithm 600, comprising, but not limited to, data from multiple scenarios, aggregation of EVs 404 into fleets 402, use of labels (e.g., next best action for a state, aggregated at fleet level) and/or use of features comprising time *k* in the horizon, fleet features (intended as aggregations of vehicle features), fleet status (intended as aggregations of the status of each vehicle at time k, such as the average state of charge of vehicles at time k) and market features (on a fixed, rolling or aggregate form). In one or more cases, features can be transformed and enriched for a machine learning pipeline (e.g., labels can be clustered in 3 classes of discharge all, do nothing, and charge all, of the classification data 254). This consolidation can result in output of one or more training datasets 513 for being employed by the training component 229 for training one or more prediction models 216.

Discussion turns now to the one or more prediction models 216 that can be generated and/or trained by the training component 229 at step 518. One or more such prediction models 216 can be at least partially comprised by the bidirectional charging determination system 202 and/or non-limiting system 200, and/or can be disposed external to the bidirectional charging determination system 202 and/or non-limiting system 200 but communicatively accessible by the bidirectional charging determination system 202 and/or non-limiting system 200.

As noted above, a set of one or more prediction models 216 employed by the non-limiting system 200 can comprise one or more classical models and/or one or more quantum models. Either such model type can comprise and/or employ artificial intelligence (AI), machine learning (ML), deep learning (DL), and/or a neural network (NN), without being limited thereto. In one or more cases, different prediction models 216 can be employed for different iterations of use of the fast solving step 522. For example, different prediction models 216 can be specified for being employed at different ranges of times $k$, such as for different periods of a day, different days of a week, different weeks of a month, and/or different months of a year. Additionally, and/or alternatively, in one or more cases, different prediction models 216 can be used for a same iteration of the fast solving step 522.

Regarding the aforementioned specified times $k$ 454, these times can be discretized from a specified time range (e.g., time range 440) and/or can correspond to a specified frequency 552. This time information can be obtained from a user entity, power supply entity, and/or the like, and/or can be set as default operating parameters for the bidirectional charging determination system 202. For example, in one or more cases, specified times $k$ 454 can be spaced apart by suitable time periods, which can be equal, different, and/or dynamically specified, such as by a user entity, power supply entity, etc. Dynamic specification can refer to updating, adjusting and/or changing a specified time 454, specified frequency 552 and/or time period between specified times 454.

In or more embodiments, a prediction model 216 can employ data from a quantum method, such as by employing one or more covariant quantum kernels 252 (e.g., employing a CQK-based machine learning method), to determine the next best aggregate action for a fleet 402, to thereby address underutilization and/over overutilization of a V2G system 406 at a specified *time k 454.*

It is noted that a fundamental concept underlying quantum kernel machine learning can involve harnessing quantum feature maps to execute a kernel. In this scenario, a quantum kernel 252 can be formed, by the training component 229, by transforming a classical feature vector into a Hilbert space through the application of a quantum feature map and/or evaluation of overlap between quantum states formed by such feature map. The classical data can be encoded into a quantum state using the quantum feature map. This map transforms classical data into a quantum state that captures the information needed for the classification task.

That is, quantum kernels can leverage a quantum computer (e.g., relative to quantum system 301) to estimate a kernel function that is classically difficult to calculate, which is then used by a classical computer (e.g., relative to bidirectional charging determination system 202). Quantum kernels (e.g., employed by a CQK-based ML model 216) can be plugged into common classical kernel learning algorithms such as support vector machines (SVMs), clustering algorithms and/or regression algorithms. Using kernel methods, quantum algorithms can be adopted through quantum kernel functions to exploit high-dimensional nonclassical feature space.

That is, covariant quantum kernels (e.g., and thus the quantum system 301) can be employed to provide satisfactory classification accuracy after kernel alignment, such as when data has an appropriate group structure. In this way, among others, use of covariant quantum kernels can lead to a provable separation between quantum and classical learners for specific problems.

The number of features of such feature space can determine the number of qubits 307 (FIG. 3) to be employed. A quantum circuit 260 used to implement the feature map, and thus to implement the associated quantum kernel 252, can have a depth that comprises a linear or polylogarithmic function of a size of a respective dataset employe.

In a quantum use case, a quantum ML model 216 can be a multi-class classification model based on covariant kernels, to be discussed further below relative to step 538 of the solution phase 520. In such case, an assumption of a group structure can be employed to train one or more CQKs 252 during the preparation phase 510, by the training component 229.

Put another way, to employ a covariant quantum kernel 252, as noted above at a beginning of the Detailed Description section herein, it often can be convenient, from a quantum execution efficiency standpoint, to focus on a small subset of actions. That is, in one or more embodiments, the prediction model 216 can be trained on input data 213 (e.g., individual EV data 230, V2G data 242, DAM data 234, and/or IDM data 236) relative to classification data 254 comprising "extreme actions" (e.g., charge all, do nothing, or discharge all). This can simplify model training in the preparation phase 510 and/or model use, while still providing satisfactory accuracy in the overall flow of the solution phase 520. Therefore, in one or more embodiments, a prediction to be made can be defined as a classification problem of defining an optimal action in a small set, given a status as the collection of features.

Turning now to quantum kernel alignment (QKA) 590, it is noted that such classification (e.g., determination and/or specification of the extreme classes or bounds of a regression) can be determined prior to kernel execution, and indeed is best performed in this manner to improve accuracy of results. For example, implementing a CQK using multiclass quantum kernel alignment (QKA) can employ defining conditions on the CQK for maximum training accuracy and existence of a group structure in the related dataset. Is it noted that if the dataset has a group structure (e.g., the above conditions hold), then using CQK can be a more efficient and/or accurate choice for multiclass classification than use of a classical method.

It is noted that for quantum kernel alignment, there are infinite ways to choose the structure of a quantum kernel. This can comprise quantum kernels used for data with a group structure for binary classification, where the kernel is defined by a unitary representation of the group ($D(\theta)$) and a fiducial state ($|\psi\rangle = V_\lambda|0\rangle$) that are optimized using QKA. For a perfect group structure in the dataset, the covariant kernel gives perfect classification result. Further, relative to cryptographic hardness assumptions, formal learning problems can be constructed for which QKE provides a quantum advantage over all classical learners.

For example, turning first to the kernel alignment, which is used to train (tune) a CQK by the training component 229, the aggregate actions (e.g., here bidirectional charging options of which there are many) can be clustered into a few isolated classes. That is, performing an exhaustive search in kernel-parameter-space can be resource intensive, which would prevent detection of small improvements in the accuracy. Such exhaustive search could employ classes of partial charging, partial discharging, delayed charging, delayed discharging, future charging, future discharging and/or any combination thereof, without being limited thereto. Accordingly, kernel alignment can instead be performed relative to the few isolated classes (e.g., all charged, all discharged, all no bidirectional charging, where "all" refers to those EVs within a class). Notably, as compared to use of a CQK without the multiclass kernel alignment, the use of QKA by the training component 229 can provide increased training accuracy for the CQK with a standard multiclass dataset.

To implement kernel alignment, by the training component 229, the following steps can be employed. Define quantum kernel

$$\mathrm{K}(\theta) = \begin{pmatrix} K11 & \cdots & K1n \\ \vdots & \ddots & \vdots \\ kn1 & \cdots & Knn \end{pmatrix}$$

with $K_{ij} = |\langle\psi(\theta,x_i)|(\theta,x_j)\rangle|^2$ from data points $X = (x_1, x_2, \ldots x_n)$. Next, the training component 229 can compute $A_\Theta$ $(K(\theta), K_1)$ (e.g., a quantum state that corresponds to certain records or certain sample from the dataset plus training parameters) and optimize with respect to the parameter $\theta$ (e.g., a vector of training/free parameter of the kernel). Next, a quantum support vector machine (QSVM) can be employed with optimized kernel parameters.

A representative mathematic formulation for the kernel alignment is next provided. For example, an ideal reference kernel for c classes can be

$$\mathrm{K_I} = \begin{pmatrix} I & \ldots\kappa\ldots & \kappa \\ \vdots & I & \vdots \\ \kappa & \ldots\kappa\ldots & I \end{pmatrix}, \text{ where } I = \begin{pmatrix} 1 & \cdots & 1 \\ \vdots & \ddots & \vdots \\ 1 & \cdots & 1 \end{pmatrix} \text{ and}$$

$$\kappa = \begin{pmatrix} -1/(c-1) & \cdots & -1/(c-1) \\ \vdots & \ddots & \vdots \\ -1/(c-1) & \cdots & -1/(c-1) \end{pmatrix}.$$

Likewise, a respective similarity measure can be

$$\mathcal{A}(K1, K2) = \frac{\langle K1|K2\rangle}{\|K1\|2\|K2\|2},$$

where $\langle A|B\rangle = \Sigma_{i,j} A_{ij} B_{ij}$ and $\|K\|2 = \langle K|K\rangle$. Here, $K$ is a kernel matrix, $\kappa$ is a matrix as defined above that is a part of $K$, $A(K1, K2)$ is a similarity measure (alignment) between two matrices, and $A$, $B$ are arbitrary matrices.

By use of the above-noted training steps, a multiclass quantum kernel alignment (CKA) 590 can be implemented by the training component 229 for tuning a CQK 252. It is noted that such CQK 252 can be employed by the prediction model 216 and can also be employed for generation of a quantum algorithm 250 used to execute and/or provide input to the prediction model 215. That is initially, a parameterized quantum circuit as a feature map can be used.

Regarding mathematical analysis and group structure for the CQK 252, from a property of a covariant kernel under a group action, $D_y$ $^{-1}Dx|\psi\rangle = |\psi\rangle$ for a fiducial state $|\psi\rangle$. A corresponding quantum algorithm 250 can comprise first computing the fiducial state $|\psi\rangle$ and $|\varphi\rangle = D_y$ $^{-1}D_x|\psi\rangle$ for two data points x and y. Next, the quantum algorithm 250 can comprise computing the distance $D_{xy} = \|\varphi - \psi\|$ for all datapoints x and y before and after quantum kernel alignment (QKA). After QKA, $D_{xy} \to 0$ for x and y belongs to the same class and for x and y belong to other classes $D_{xy}$ is as large as possible.

As an aside, it is noted that transformation to classification is an example. It is still possible to keep the ML problem of bidirectional charging as a regression problem in general. That is, a regression problem-based prediction model 216 (whether being quantum or classical) can be trained and employed at least partially in parallel with, and/or or in alternative to, a classification-based prediction model 216 (whether being quantum or classical).

Discussion turns now to the solution phase, while still referring to FIGS. 5A and 5B, and also to FIG. 2.

Briefly, using the information obtained by the obtaining component, and using the one or more prediction models 216 trained by the training component 229, the processes of the solution phase 520 can provide a fast-solving framework through use of one or more prediction models 216. In one or more embodiments, the solution phase 520 can employ a quantum system 301, and particularly can employ covariant quantum kernels (CQK) 252 operated at a quantum system 301, and as trained by the training component 229 during the preparation phase 510.

Discussion first turns to the fast-solving step 522 of the solution phase 520, and then to the optional polishing or revising/refining step 524.

As illustrated at FIGS. 5A and 5B, sub-step 532 of step 522, the one or more processes to be discussed below (e.g., sub-steps 536 to 542) can be performed (e.g., iterated) a plurality of times, with any two or more being at least partially in parallel with one another, using a plurality of prediction models 216. In one or more embodiments, iterating over two or more prediction models 216 can be performed relative to a same specified time k 454. As noted above, such different prediction models 216 can comprise a combination of classical and quantum models, where one or more quantum models can employ a CQK 252.

In one or more additional and/or alternative embodiments, as illustrated at sub-step 534 of step 522, iterating of the sub-steps 536 to 540 can be based on different times k specified at step 542.

Relative to sub-step 534, it is noted that time $k$ 454 employed can be dynamically specified. For example, a modifying component 226 of the bidirectional charging determination system 202 can modify the specified frequency 552, and/or only one or more next and/or future specified times $k$ 454, such as based on an intraday electricity market projection in connection with providable electricity at the V2G at another specified time 454 (e.g., prior to the one or more next and/or future specified times $k$ 454). For example, V2G demand data 232, DAM data 234 and/or IDM data 236 can be regularly obtained by the obtaining component 212, as noted above, with a most current data being employed by the modifying component 226.

In one or more cases, such automatic modification by the modifying component 226 can be the exception rather than the norm, such as in response to a previously unencountered condition of the V2G, DAM or IDM. That is, such condition (e.g., the information 232, 234, 236) can be compared, by the modifying component 226, to known data, historical data and/or one or more training datasets 513, which can be stored at any suitable location, database, etc. that is communicatively accessible to the bidirectional charging determination system 202. This comparison can be performed by the modifying component 226 at a specified frequency, continuously, etc.

In one or more cases, the modifying component 226, where encountering such previously unencountered condition, can generate a notification, trigger, communication, etc. to the training component 229 of the bidirectional charging determination system 202 to suggest, control, initiate, trigger, etc. a retraining of one or more prediction models 216 based on the unencountered condition.

Notably, this same V2G demand data 232, DAM data 234 and/or IDM data 236 can be employed by a user entity, power supply entity, etc. submitting a manual request for the dynamic specification. That is, in one or more embodiments, the modifying component can modify the specified frequency 552 and/or one or more specified times $k$ 454 based on user entity (e.g., user entity and/or power supply entity) feedback and/or input, and thus the change can be made on demand, rather than automatically. In such case, the user entity can employ a computing device communicatively couplable to the non-limiting system 200.

Discussion turns now to an aggregating/disaggregating method employed by the aggregating component 214, optimizing component and scheduling component 218. The aggregating/disaggregating method comprises both aggregation of dynamic (e.g., continuously obtained) fleet-level data and disaggregation of a result of the aggregation via unpacking into EV-level data.

As a brief roadmap, one or more processes performed by the aggregating component 214 can ultimately result in the output of a fleet-level feature set 238, which can be employed by the prediction model 216 at direction of the optimizing component 215 to generate a next best aggregate action (e.g., fleet-level solution 240), which then can be disaggregated into a final outcome 289, by the scheduling component 218, comprising a vehicle-level (e.g., EV-level) schedule 290 and/or DAM/IDM input 291 (e.g., for use of the DAM and/or IDM).

As noted above, this aggregating/disaggregating method can be performed/iterated various times for a same specified time $k$ 454 using one or more different prediction models 216, which can have been trained on different training datasets 513 and/or comprise different types of models.

These one or more processes of the aggregating component 214, optimizing component 215 and scheduling component 218 can be more generally referred to as a dynamic programming (DP) with aggregation method. It is noted that the intuition behind DP with aggregation, which can be employed relative to the fast solving step 522 to be discussed later, can arise from a fact that an objective function of interest can depend only on variables through the aggregate expression $(1, i_k\rangle$. Consequently, the idea is to define a DP tree only on different choices of aggregated states $(1, i_k\rangle$ and correspondingly aggregated actions $(1, \mu\rangle$. That is, with backward dynamics, the aggregating component 214, optimizing component 215 and scheduling component 216 can loop over time $k$, over each aggregate state at time $k$ and each aggregate action. In order to proceed further with the optimizing algorithm 800, ensuring feasibility of the states at the disaggregate (unpacked) level, an unpacking heuristic is applied by the scheduling component 218, which can provide a feasible unpacked action to the time step, given the aggregated action and the state before applying the action.

Turning first to the aggregating component 214, this component generally can construct a fleet-level feature set (e.g., fleet-level feature set 238) corresponding to a specified time $k$ 454 by transforming individual EV data 230 or fleet-based V2G data 232 comprising individual EV charge state data and individual EV connection state data into a higher granularity fleet-level feature set 238. It is noted that such aggregation at sub-step 536 is but a first step of the aggregating/disaggregating.

For example, the aggregating component 214 can employ current and/or recently updated input data 213, such as having been obtained by the obtaining component 212. Aggregation in this sense can comprise consolidation of input data 213 relating to individual EVs, or groups of EVs, to higher granularity data at a fleet-level (e.g., the fleet-level feature set 238). This aggregation of data can allow for easier and/or more efficient use of the data by the prediction model 216, such as related to the classifications discussed above relative to the preparation phase 510.

Discussion next turns operation of the one or more trained prediction models 216, such as based on control by the optimizing component 215, which in one or more cases also can employ operation of the exemplary quantum system 301. Thereafter, discussion will turn to operation of the quantum system 301.

Accordingly, turning now to sub-step 538, the one or more trained prediction models 216 can be applied (e.g., operated), by the optimizing component 215, using the fleet-level feature set 238, to estimate a next best aggregate action, also herein referred to as a fleet-level solution 240. The fleet-level solution 240 can comprise a multi-class classification 242, such as where a classification-based prediction model 216 is employed instead of a regression-based prediction model 216.

It is noted that use of the prediction model 216 is not restricted by particular architecture of a prediction model 216.

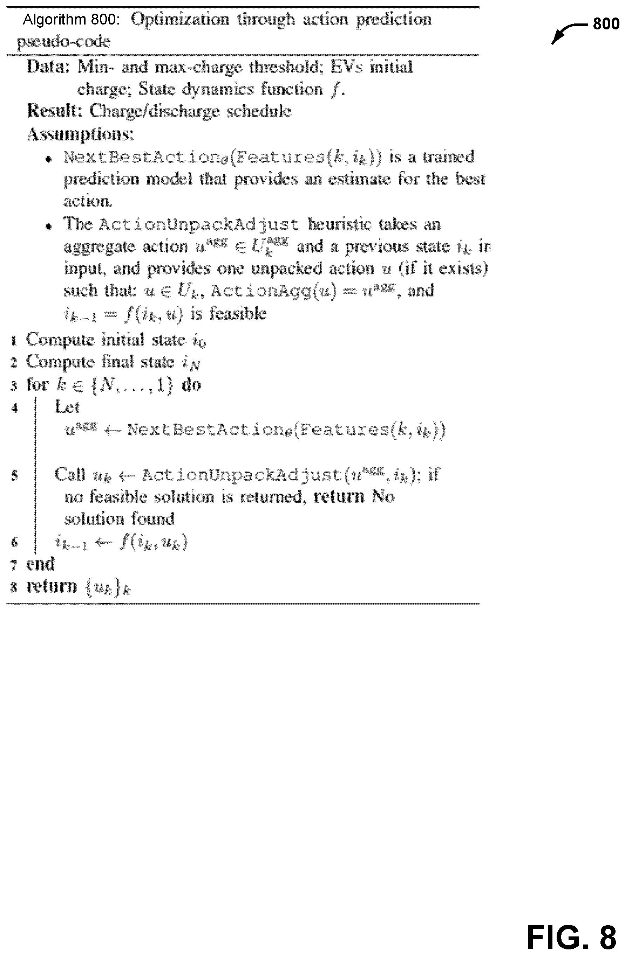

Relative to use of the prediction model 216, it is noted that a bottleneck of the processes herein, such as relative to the optimizing algorithm 800 (FIG. 8), can lie in a need to loop through multiple states and actions at each time step. Said number of options, despite being polynomial in the number of vehicles, is prohibitively large in a real-world application, given the tight time frame for solving the problem. Accordingly, this bottleneck can be addressed by approximating the next best action through the prediction model 216, trained on multiple scenarios. It is noted that the term "next best action" is employed to enforce that it is the next action used by the algorithm (e.g., optimizing algorithm 800). Nevertheless, adopting the convention of writing backward algorithms, the next best action can be referred to the previous time period.

In one or more embodiments, a quantum-based prediction model 216 can employ a covariant quantum kernel (CQK) for multiclass classification. In this way, the multi-class classification 258 can be obtained (e.g., output by the prediction model 216), corresponding to a set of one or more quantum measurement readouts 320 to be output by the quantum system 301. For example, the executing component 220 can control execution of a CQK 252 at the quantum system 301. This can comprise employing the assumption of use of a group structure for at least one of plural classes bounding the multi-class classification based on classification data 254, which, along with the quantum algorithm 250, and any data defining one or more CQKs 252, can be comprised by a quantum job request 324 to be sent to and/or obtained by the quantum system 301 (e.g., by the orchestrator component 303). As a result of operation of the quantum system 301, one or more quantum measurement readouts 320 can be employed by the optimizing component 215 to determine one or more expectation values 286. These expectation values 286, representing probabilities related to the CQK 252, can be transformed into a classification input 550 for a support vector machine (SVM).

Accordingly, using the fleet-level feature set 238 and the prediction model 216 (based on a CQK 252), the optimizing component 215 can generate a next best action (e.g., a fleet-level solution 240). Regarding operation of the prediction model 216, the fleet-level features set 238 for a time k can be transformed (e.g., by the optimizing component 215) into a suitable format for the prediction model 216. Then, the executing component 220 can direct execution of the quantum algorithm 250 (comprising execution of the CQK 252). The output of the quantum system 301 is measured by the quantum system (e.g., qubit control electronics 308) resulting in one or more quantum measurement readouts 320. The optimizing component 215 can determine one or more expectation values 286, which data can be transformed into a suitable format for use by a support vector machine (SVM) of, and/or employed by, the optimizing component 215 (e.g., transformed into the classification input 550). The SVM outputs a prediction employed by the optimizing component 215 to generate the fleet-level solution 240. In one or more embodiments, the SVM can be a classical SVM or a quantum SVM.

As an aside, it is noted that the executing component 220 can generate the quantum algorithm 250 based on the one or more CQKs 252, and further can generate one or more quantum circuits 260 based on the quantum algorithm 250. These processes are understood by one having ordinary skill in the art and are not discussed herein for sake of brevity.

Next, discussion turns to general description of an exemplary quantum system 301 that can be operated to provide execution of the quantum circuits 260 and provision of the quantum measurement readouts 320 in connection with the classical system 202 (e.g., bidirectional charging determination system 202).

Turning to FIG. 3, one or more embodiments described herein can include one or more devices, systems and/or apparatuses that can provide a process to generate one or more waveforms or pulses for a quantum-based operation (e.g., using a quantum device), such as for operating one or more qubits of a quantum device. Accordingly, at FIG. 3, illustrated is a block diagram of an example, non-limiting system 300 that can at least partially facilitate such a process. While referring here to one or more processes, facilitations and/or uses of the non-limiting system 300, description provided herein, both above and below, also can be relevant to one or more other non-limiting systems described herein, such as the non-limiting system 200.

As illustrated at FIG. 3, the non-limiting system 300 can comprise a quantum system 301 that can be employed with or separate from the classical system 202.

Generally, the quantum system 301 (e.g., quantum computer system, superconducting quantum computer system and/or the like) can employ quantum algorithms and/or quantum circuitry, including computing components and/or devices, to perform quantum operations and/or functions on input data to produce results that can be output to an entity. The quantum circuitry can comprise quantum bits (qubits), such as multi-bit qubits, physical circuit level components, high level components and/or functions. The quantum circuity can comprise physical pulses that can be structured (e.g., arranged and/or designed) to perform desired quantum functions and/or computations on data (e.g., input data and/or intermediate data derived from input data) to produce one or more quantum results as an output. The quantum results, e.g., quantum measurement readout 320, can be responsive to the quantum job request 324 and associated input data and can be based at least in part on the input data, quantum functions and/or quantum computations.

In one or more embodiments, the quantum system 301 can comprise components, such as an orchestrator component 303, a quantum processor 306, pulse component (e.g., a waveform generator 310) and/or a readout electronics 312 (e.g., readout component).

The quantum processor 306 can comprise one or more, such as plural, qubits 307. Individual qubits 307A, 307B and 307C, for example, can be fixed frequency and/or single junction qubits, such as transmon qubits.

In one or more embodiments, a readout resonator can be associated with, such as located with physical hardware defining a qubit 307.

In one or more embodiments, a memory 316 and/or processor 314 can be associated with the orchestrator component 303, where suitable. The processor 314 can be any suitable processor. The processor 314 can generate one or more instructions for controlling the one or more processes of the orchestrator component 303, such as for controlling one or more subordinate controllers (e.g., qubit control electronics 308).

The orchestrator component 303 can obtain (e.g., download, receive, search for and/or the like) a quantum job request 324 requesting execution of one or more quantum programs and/or a physical qubit layout. The quantum job request 324 can be provided in any suitable format, such as a text format, binary format and/or another suitable format. In one or more embodiments, the quantum job request 324 can be obtained by a component other than of the quantum system 301, such as a by a component of the classical system 202.

The orchestrator component 303 can determine mapping of one or more quantum logic circuits for executing a quantum program. In one or more embodiments, the orchestrator component 303 and/or quantum processor 306 can direct the waveform generator 310 to generate one or more pulses, tones, waveforms and/or the like to affect one or more qubits 307, such as in response to a quantum job request 324.

In one or more embodiments, more than one orchestrator component 303 can be comprised by the quantum system 301. The one or more orchestrator components 303 can be employed to control one or more qubit control electronics 308. Thus, the one or more qubit control electronics 308A, 308B and/or 308C can be communicatively coupled to the one or more orchestrator components 303.

Qubit control electronics 308 can be employed by the quantum processor 306 and disposed within a room temperature environment external to the cryogenic environment 317, as illustrated. In one or more embodiments, one or more aspects of one or more qubit control electronics can be disposed within a cryogenic environment 317.

In one or more embodiments a qubit control electronics 308 can be provided per qubit 307. In one or more embodiments, a qubit control electronics 308 can be provided to communicate with more than one qubit 307 per that qubit control electronics 308.

In one or more embodiments, a qubit control electronics 308 can be and/or can comprise a qubit drive card (e.g., a waveform generator 310) and/or a qubit acquire card (e.g., readout electronics 312). In one or more embodiments, a qubit control electronics 308 can be and/or can comprise only one of a qubit drive card or a qubit acquire card. In one or more embodiments, a qubit control electronics 308 can comprise more than one qubit drive card and/or more than one qubit acquire card.

A waveform generator 310 generally can cause at least one qubit 307 of the quantum processor 306 to perform one or more quantum processes, calculations and/or measurements by creating a suitable electro-magnetic signal. For example, the waveform generator 310 can operate one or more qubit effectors, such as qubit oscillators, harmonic oscillators, pulse generators and/or the like to cause one or more pulses to stimulate and/or manipulate the state(s) of the one or more qubits 307 comprised by the quantum system 301. Indeed, a signal can be generated by the waveform generator 310 to affect one or more of the plurality of qubits 307.

In one or more embodiments, the waveform generator 310 can direct application of such electro-magnetic signal by use of the various qubit control electronics 308.

The quantum processor 306 can be contained in a cryogenic environment, such as generated by a cryogenic environment 317, such as effected by a dilution refrigerator. Where the plurality of qubits 307 are superconducting qubits, cryogenic temperatures, such as about 4K or lower, can be employed for function of these physical qubits.

The readout electronics 312 can comprise and/or be comprised by the acquire card. The readout electronics 312 and/or the acquire card can comprise an analog to digital converter (ADC) 315 that can be employed for the readout path of one or more qubits 307. The readout electronics 312, or at least a portion thereof, can be contained in a room temperature environment or the cryogenic environment 317, such as for reading a state, frequency and/or other characteristic of qubit, excited, decaying or otherwise. Accordingly, one or more elements of the readout electronics 312 also can be constructed to perform at such cryogenic temperatures.

In one or more embodiments, more than one cryogenic environment, such as more than one dilution refrigerator, can be comprised by the quantum system 301.

It is noted that one or more aspects of the aforementioned description can refer to operation of a single set of instructions run on a single qubit controller or set of qubit control electronics. However, scaling can be achieved. For example, instructions can be calculated, transmitted, employed and/or otherwise used relative to one or more qubits (e.g., non-neighbor qubits) in parallel with one another, one or more quantum circuits in parallel with one another, and/or one or more qubit mappings in parallel with one another.

Turning now back to FIGS. 2, 5A and 5B, discussion turns to one or more additional processes performed by one or more additional components of the bidirectional charging determination system 202.

Turning now to the scheduling component 216 and to sub-step 540, using the fleet-level solution 240, the scheduling component 218 can generate a final outcome 289. The final outcome 289 can comprise a bidirectional charging solution (e.g., a schedule 290) and/or a DAM/IDM input 291. A DAM/IDM input 291 can comprise information describing current disaggregated states a fleet of EVs 404, thus allowing for determination of whether a DAM commitment can be met and/or whether an IDM should be employed to buy and/or sell a quantity of power. A schedule 290 can define metes and bounds for bidirectional charging of at least a portion of the fleet 402 by disaggregating the fleet-level solution 240 based on a multi-class classification 242.

In one or more embodiments, the scheduling component 218 can construct the schedule 290 for applicability over plural specified times 454 corresponding to plural apexes of the specified frequency 552 driving regeneration of the schedule 290. The decision to employ such longer scheduling can be determined by a user entity or power supply entity and supplied to the bidirectional charging determination system 202, for example as a parameter or hyper parameter for one or more prediction models 216 and/or for the scheduling component 218.

In one or more embodiments, at step 540, the scheduling component 218 can employ the dissolver algorithm 700 to provide for unpacking of the fleet-level solution 240, resulting in a schedule 290 providing information for implementation at a vehicle level, rather than at a fleet level.

Regarding the dissolver algorithm 700, this algorithm can provide a blueprint for an unpacking routine of the fleet-level solution 240. In turn, it depends on two subroutines of *ClassifyBehavior* and *ScoreCharge*. The former defines the set of feasible actions for a vehicle, considering: (a) that the vehicle must satisfy its minimal and maximal state of charge; (b) that the vehicle must satisfy the constant-sign window at time k, and (c) that there must be at least one trajectory that takes the vehicle to its initial state of charge in k steps (going backward), without violating the minimal/maximal state of charge, as well as the constant-sign windows.

*ScoreCharge,* instead, is a heuristic providing a score to a vehicle to indicate how desirable it is to charge it.

*ScoreCharge* $(i_k^l) \in \{-N^{const} + 1, ..., 0, ..., N^{const} - 1\}$ is defined as follows. Suppose that an EV was in a charging window at time *k+k'*, and then has been idle *at k+1, ..., k+k'-1.* Then, it would be preferable to charge, because this would allow the continuation of the same charging window, providing more flexibility in future schedules. Moreover, the higher *k'*, the weaker the preference, and *if k'* ≥ *N^{const},* there is no actual preference. Therefore,

$$\text{ScoreCharge}(i_k^l) = w \max\{N^{const} - k', 0\}$$

, where w = +1 if the window that terminated at time *k + k'* was a charging window, and w = -1 if it was a discharging window. Here, it is noted that *k* is a time period, *N* is a number of EVs 404, and $i_k^l$ is a state of the EV l at time k.

It is noted that at step 13 of the dissolver algorithm 700, a match between the aggregate state and the unpacked one is checked. It is possible to simply drop the check, obtaining an approximate unpacking procedure *ActionUnpack-Adjust,* which can be helpful in practice. For instance, this is what can be employed in a case of extreme actions, as described above.

It is noted that step 16 of the dissolver algorithm 700 can be replaced with a balancing logic, namely one can charge vehicles with a high score and discharge those with a low score, as long as the sum of the contributions sums up to zero.

Further, the unpacking heuristic can scale linearly in the number of EVs. It can be possible to store the sign $w_l$ of the latest window of each vehicle EV, as well as the time to the end of the window $k'_1$ (either positive or negative) to speed up the calculation of *ClassifyBehavior* and *ScoreCharge* by the scheduling component 218.

Next, at sub-step 542, the iterating component 222 can proceed to control use of one or more additional prediction models 216 relative to a same fleet-level feature set 238. For example, as noted above, where continued iteration is desired, steps 538 and 540 can be directed to be repeated (e.g., directed by the iterating component 222) for generation of additional fleet-level solutions 240 and corresponding additional final outcomes 289. Additionally, and/or alternatively, the iterating component 222 can control regeneration of the schedule 290, or it can be referred to as generation of another schedule 290, at a specified frequency (e.g., specified frequency 552) corresponding to a set of specified time (e.g., specified times t 454) over a specified time range (e.g., time range 450). For example, as noted above, where continued iteration is desired, such as during operating hours of a DAM or IDM, steps 536, 538 and 540 can be directed to be repeated (e.g., directed by the iterating component 222).

In one or more embodiments, due to the above-mentioned time constraints of desired fast solution, a regeneration of the schedule 290/generation of a new schedule 290 can be at least partially triggered (e.g., initiated) by the iterating component 222 prior to an output of the schedule 290 for bidirectional charging at step 544 (FIGS. 5A and 5B).

Turning next to sub-step 544, in one or more embodiments, where plural prediction models 216 were employed, the evaluating component 224 can determine a final outcome 289, from a group of possible final outcomes 289 output relative to different prediction models 216 and/or to different iterations of execution of one or more prediction models 216 for a same time k 454. The output can be based on comparison of the plurality of final outcomes 289 to one another to determine the final outcome 289 comprising a lowest objective function value. Here, a purpose is to obtain a best prediction accuracy as possible.

As a result, a final outcome 289 can be output, such as by the evaluating component 224 and/or scheduling component 218. The final outcome 289 can define the volumes to be traded in the day-ahead market, by optimizing the volumes that can be sold to the grid or that must be bought from the grid at each time, considering the storage capacity of electric vehicles. As such, a final outcome 289 can be a DAM/IDM input 291. Additionally, and/or alternatively, the final outcome 289 can comprise and/or be a schedule 290 that can define an optimal schedule for one or more EVs 404 in the fleet 402 to attend to a V2G demand (e.g., the committed volumes on a DAM) while minimizing costly intra-day energy purchases on the IDM.

In one or more embodiments, a post-processing component 228 can direct use of at least a portion of the schedule 290 as input data for warm start of an approximate solution application (e.g., an existing, conventional framework).

In one or more embodiments, the post-processing component 228 can generate a request for feedback regarding the final outcome 289, such as from a user entity and/or power supply entity, which entity can provide feedback via a suitable computer device communicatively couplable to the bidirectional charging determination system 202. The obtaining component 212 can obtain the feedback using one or more processes noted above relative to other obtaining processes performed by the obtaining component 212. For example, the obtaining component 212 can find, locate, determine, request, download, read and/or otherwise obtain feedback information (e.g., data and/or metadata), relating to a final outcome 289 output by the bidirectional charging determination system 202, such as from a user entity, power supply entity, and/or the like. In one or more cases, such entity can employ a computing device communicatively couplable to the bidirectional charging determination system 202 to submit the feedback.

In one or more embodiments, the feedback can be employed by the training component 229 to retrain one or more prediction models 216. That is, in one or more embodiments, the training component 229 can retrain one or more prediction models 216 based on such feedback and/or based on a comparison to known and/or historical data, as discussed above. By use of the retraining, the bidirectional charging determination system 202 can be self-improving, such as to become more accurate and efficient over the course of continued executions of the bidirectional charging determination system 202.

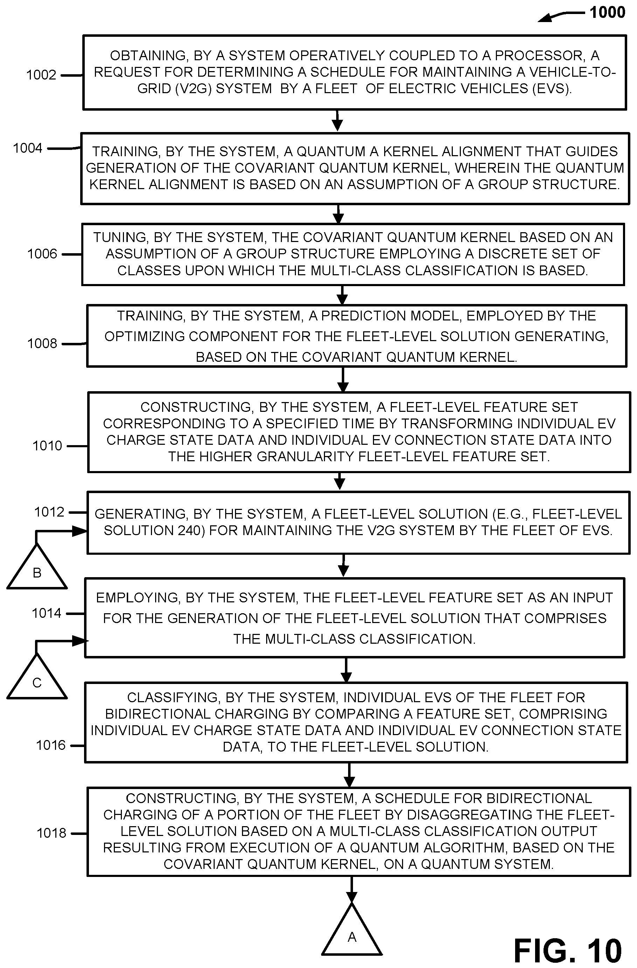

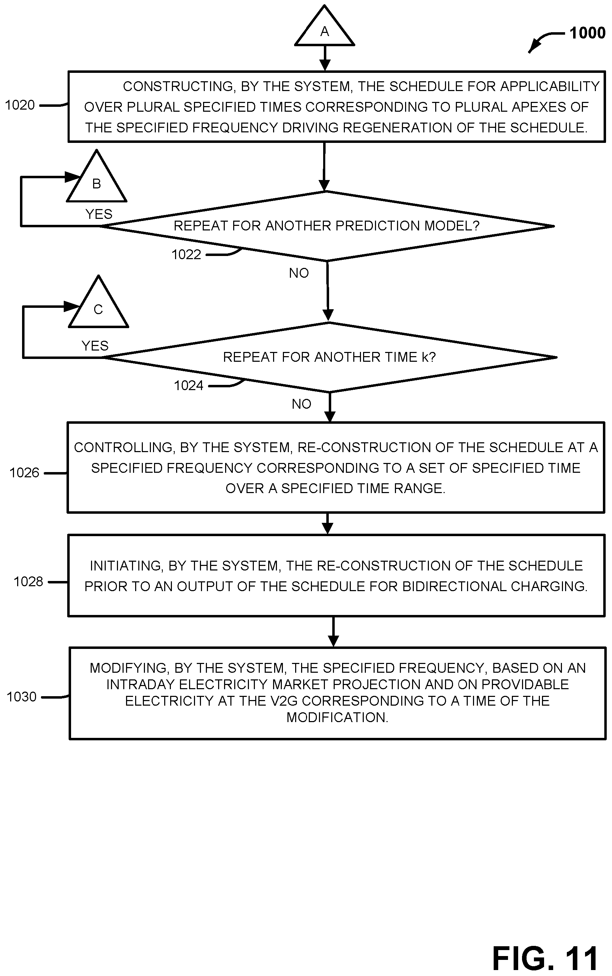

Referring next to FIGS. 10 and 11, as a summary of the training phase 510 and solution phase 520, illustrated is a flow diagram of an example, non-limiting method 1000 that can provide a process to determine dynamic scheduling of electric vehicle 404 bidirectional charging, and/or for maintaining a V2G system 406, in accordance with one or more embodiments described herein, such as the non-limiting system 200 of FIG. 2. While the non-limiting method 1000 is described relative to the non-limiting system 200 of FIG. 2, the non-limiting method 1000 can be applicable also to other systems described herein, such as the non-limiting system 100 of FIG. 1. Repetitive description of like elements and/or processes employed in respective embodiments is omitted for sake of brevity.

At 1002, the non-limiting method 1000 can comprise obtaining, by a system operatively coupled to a processor (e.g., obtaining component 212 coupled to processor 206), a request for determining a schedule (e.g., schedule 290) for maintaining a vehicle-to-grid (V2G) system (e.g., V2G system 406) by a fleet (e.g., fleet 402) of electric vehicles (EVs) (e.g., EVs 404).

At 1004, the non-limiting method 1000 can comprise training, by the system (e.g., training component 229), a quantum a kernel alignment that guides generation of the covariant quantum kernel, wherein the quantum kernel alignment is based on an assumption of a group structure.

At 1006, the non-limiting method 1000 can comprise tuning, by the system (e.g., training component 229), the covariant quantum kernel based on an assumption of a group structure employing a discrete set of classes upon which the multi-class classification is based.

At 1008, the non-limiting method 1000 can comprise training, by the system (e.g., training component 229), a prediction model, employed by the optimizing component for the fleet-level solution generating, based on the covariant quantum kernel.

At 1010, the non-limiting method 1000 can comprise constructing, by the system (e.g., aggregating component 214) a fleet-level feature set (e.g., fleet-level feature set 238) corresponding to a specified time (e.g., specified time $k$ 454) by transforming individual EV charge state data and individual EV connection state data (e.g., individual EV data 230) into the higher granularity fleet-level feature set.

At 1012, the non-limiting method 1000 can comprise generating, by the system (e.g., aggregating component 214), a fleet-level solution (e.g., fleet-level solution 240) for maintaining the V2G system by the fleet of EVs.

At 1014, the non-limiting method 1000 can comprise employing, by the system (e.g., prediction model 216), the fleet-level feature set as an input for the generation of the fleet-level solution that comprises the multi-class classification.

At 1016, the non-limiting method 1000 can comprise classifying, by the system (e.g., prediction model 216), individual EVs of the fleet for bidirectional charging by comparing a feature set (e.g., individual EV data 230), comprising individual EV charge state data and individual EV connection state data, to the fleet-level solution.

At 1018, the non-limiting method 1000 can comprise constructing, by the system (e.g., scheduling component 218), a schedule (e.g., schedule 290) for bidirectional charging of a portion of the fleet by disaggregating the fleet-level solution based on a multi-class classification (e.g., multi-class classification 242) resulting from an execution of a quantum algorithm (e.g., quantum algorithm 250), based on the covariant quantum kernel (e.g., covariant quantum kernels 252), on a quantum system (e.g., quantum system 301).

At 1020, the non-limiting method 1000 can comprise constructing, by the system (e.g., scheduling component 218), the schedule for applicability over plural specified times corresponding to plural apexes of the specified frequency driving regeneration of the schedule.

At 1022, the non-limiting method 1000 can comprise determining, by the system (e.g., iterating component 222), whether construction of the schedule is to be repeated using another prediction model. If yes, the non-limiting method 1000 can proceed back to step 1012. If not, the non-limiting method 1000 can proceed to step 1024.

At 1024, the non-limiting method 1000 can comprise determining, by the system (e.g., iterating component 222), whether construction of the schedule is to be repeated for an additional time $k$. If yes, the non-limiting method 1000 can proceed back to step 1010. If not, the non-limiting method 1000 can proceed to step 1026.

At 1026, the non-limiting method 1000 can comprise controlling, by the system (e.g., iterating component 222), re-construction of the schedule at a specified frequency (e.g., specified frequency 552) corresponding to a set of specified time (e.g., specified times $t$ 454) over a specified time range (e.g., time range 450).

At 1028, the non-limiting method 1000 can comprise initiating, by the system (e.g., iterating component 222), the re-construction of the schedule prior to an output of the schedule for bidirectional charging.

At 1030, the non-limiting method 1000 can comprise modifying, by the system (e.g., modifying component 226), the specified frequency, based on an intraday electricity market projection and on providable electricity at the V2G corresponding to a time of the modification.

ADDITIONAL SUMMARY

For simplicity of explanation, the computer-implemented and non-computer-implemented methodologies provided herein are depicted and/or described as a series of acts. It is to be understood that the subject innovation is not limited by the acts illustrated and/or by the order of acts, for example acts can occur in one or more orders and/or concurrently, and with other acts not presented and described herein. Furthermore, not all illustrated acts can be utilized to implement the computer-implemented and non-computer-implemented methodologies in accordance with the described subject matter. In addition, the computer-implemented and non-computer-implemented methodologies could alternatively be represented as a series of interrelated states via a state diagram or events. Additionally, the computer-implemented methodologies described hereinafter and throughout this specification are capable of being stored on an article of manufacture for transporting and transferring the computer-implemented methodologies to computers. The term article of manufacture, as used herein, is intended to encompass a computer program accessible from any computer-readable device or storage media.

The systems and/or devices have been (and/or will be further) described herein with respect to interaction between one or more components. Such systems and/or components can include those components or sub-components specified therein, one or more of the specified components and/or sub-components, and/or additional components. Sub-components can be implemented as components communicatively coupled to other components rather than included within parent components. One or more components and/or sub-components can be combined into a single component providing aggregate functionality. The components can interact with one or more other components not specifically described herein for the sake of brevity, but known by those of skill in the art.

In summary, the one or more embodiments described herein can provide a system, computer-implemented method and/or computer program product to facilitate a process to maintain a vehicle-to-grid system and/or to determine dynamic scheduling of electric vehicle bidirectional charging. A system 100, 200 comprises a memory 104, 204 that stores computer executable components, and a processor 106, 206 that executes the computer executable components stored in the memory 104, 204, wherein the computer executable components comprise an optimizing component 115, 215 that generates a fleet-level solution 140, 240 for maintaining a vehicle-to-grid (V2G) system 406 by a fleet 402 of electric vehicles (EVs) 404, and a scheduling component 118, 218 that constructs a schedule 190, 290 for bidirectional charging of a portion of the fleet 402 by disaggregating the fleet-level solution 140, 240 based on a multi-class classification 142, 258 resulting from an execution of a quantum algorithm 150, 250, based on a covariant quantum kernel 152, 252, by a quantum system 301. In one or more embodiments the multi-class classification 142, 242 comprises classes of charging, discharging, and no bidirectional charging.

A benefit of the system, and/or of a corresponding computer-implemented method and/or computer program product, can be an ability to deliver, using EV battery capacity, electricity as close to as possible to the committed volume marketed on a corresponding day-ahead electricity market, thereby reducing expenses incurred from purchasing energy on a corresponding intraday electricity market to make up for an electricity contribution that is less than the committed volume.

Another benefit can be an ability to determine a dynamic and/or day-of schedule for the use of the EV battery capacity, to thereby accommodate changes of the live market and stochasticity of EV properties.

Still another benefit can be an ability to provide good classification accuracy for prediction of a next best action (e.g., a fleet-level solution) at a disaggregated vehicle level of information for a fleet of EV vehicles. This can be provided through the use of one or more covariant quantum kernels based on a set of aggregated features corresponding to an aggregated fleet level of information.

Indeed, in view of the one or more embodiments described herein, a practical application of the one or more systems, computer-implemented methods and/or computer program products described herein can be an increased efficiency of determination of scheduling of bidirectional charging of EVs relative to a V2G, by providing a framework employing increased granularity of approximation, allowing for scaling into the millions of EVs comprised by one or more fleets being analyzed.

In connection therewith, the one or more embodiments described herein can provide useful and/or practical applications of computers, thus providing enhanced (e.g., improved and/or optimized) quantum system setup and/or quantum system use as compared to existing frameworks for determining a bidirectional charging schedule for a fleet of EVs, which generally do not use a quantum computer for any associated prediction thereof. Overall, such computerized tools can constitute a concrete and tangible technical improvement in the fields of quantum processing and/or V2G maintenance.

One or more embodiments described herein can be employed to perform two or more processes at least partially in parallel with one another for one or more times t for one or more different EV fleets 402. For example, one or more fleets 402 can be analyzed to provide one or more schedules, each applicable to one or more sub-groups of EVs 404 or to one or more individual EVs 404 of the respective fleets 402, at least partially at a same time as one another. Furthermore, scaling can be appliable, additionally and/or alternatively, to determination of such one or more schedules at two or more specified times t at least partially at a same time as one another. These various scalings can be applicable to a same V2G 406 or to two or more different V2Gs 406 at least partially at a same time as one another.

The systems and/or devices have been (and/or will be further) described herein with respect to interaction between one or more components. Such systems and/or components can include those components or sub-components specified therein, one or more of the specified components and/or sub-components, and/or additional components. Sub-components can be implemented as components communicatively coupled to other components rather than included within parent components. One or more components and/or sub-components can be combined into a single component providing aggregate functionality. The components can interact with one or more other components not specifically described herein for the sake of brevity, but known by those of skill in the art.

One or more embodiments described herein can be, in one or more embodiments, inherently and/or inextricably tied to computer technology and cannot be implemented outside of a computing environment. For example, one or more processes performed by one or more embodiments described herein can more efficiently, and even more feasibly, provide program and/or program instruction execution, such as relative to quantum-based construction of a V2G maintaining schedule by employing use of EVs relative to the V2G, as compared to existing systems and/or techniques unable to provide such usage and/or efficiencies. Systems, computer-implemented methods and/or computer program products providing performance of these processes are of great utility in the fields of quantum processing and/or V2G maintenance and cannot be equally practicably implemented in a sensible way outside of a computing environment.

One or more embodiments described herein can employ hardware and/or software to solve problems that are highly technical, that are not abstract, and that cannot be performed as a set of mental acts by a human. For example, a human, or even thousands of humans, cannot efficiently, accurately and/or effectively automatically or even partially automatically perform quantum circuit execution at a plurality of qubits of a quantum system as the one or more embodiments described herein can provide these processes. For another example, a human, or even thousands of humans, cannot efficiently, accurately and/or effectively automatically or even partially automatically generate and/or employ a quantum kernel as the one or more embodiments described herein can provide these processes. Moreover, neither can the human mind nor a human with pen and paper conduct these processes, as conducted by one or more embodiments described herein.

In one or more embodiments, one or more of the processes described herein can be performed by one or more specialized computers (e.g., a specialized processing unit, a specialized classical computer, a specialized quantum computer, a specialized hybrid classical/quantum system and/or another type of specialized computer) to execute defined tasks related to the one or more technologies describe above. One or more embodiments described herein and/or components thereof can be employed to solve new problems that arise through advancements in technologies mentioned above, employment of quantum computing systems, cloud computing systems, computer architecture and/or another technology.

One or more embodiments described herein can be fully operational towards performing one or more other functions (e.g., fully powered on, fully executed and/or another function) while also performing one or more of the one or more operations described herein.

To provide additional summary, a listing of embodiments and features thereof is provided.

A system, comprising: a memory that stores computer executable components; and a processor that executes the computer executable components stored in the memory, wherein the computer executable components comprise: an optimizing component that generates a fleet-level solution for maintaining a vehicle-to-grid (V2G) system by a fleet of electric vehicles (EVs); and a scheduling component that constructs a schedule for bidirectional charging of a portion of the fleet by disaggregating the fleet-level solution based on a multi-class classification resulting from an execution of a quantum algorithm, based on a covariant quantum kernel, on a quantum system.

The system of the preceding paragraph, wherein the covariant quantum kernel is tuned based on an assumption of a group structure employing a discrete set of classes upon which the multi-class classification is based.

The system of any preceding paragraph, wherein the schedule comprises a bidirectional charging suggestion for at least one class of the discrete set of classes upon which the covariant quantum kernel has been tuned.

The system of any preceding paragraph, wherein the multi-class classification comprises classes of charging, discharging, and no bidirectional charging.

The system of any preceding paragraph, wherein the computer executable components further comprise: a training component that generates a quantum a kernel alignment that guides generation of the covariant quantum kernel, wherein the quantum kernel alignment is based on an assumption of a group structure, and wherein the training component trains a prediction model, employed by the optimizing component, based on the covariant quantum kernel.

The system of any preceding paragraph, wherein the scheduling component classifies individual EVs of the fleet for bidirectional charging by comparing a feature set, comprising individual EV charge state data and individual EV connection state data, to the fleet-level solution.

The system of any preceding paragraph, wherein the computer executable components further comprise: an aggregating component that constructs a fleet-level feature set corresponding to a specified time by transforming individual EV charge state data and individual EV connection state data for a plurality of EVs of the fleet into the higher granularity fleet-level feature set; and a covariant quantum kernel-based prediction model that employs the fleet-level feature set as an input for the generation of the fleet-level solution that comprises the multi-class classification.

The system of any preceding paragraph, wherein the computer executable components further comprise: an iterating component that controls re-construction of the schedule at a specified frequency corresponding to a set of specified times over a specified time range, wherein the iterating component initiates the re-construction of the schedule prior to output of the schedule.

The system of any preceding paragraph, wherein the computer executable components further comprise: a modifying component executes a modification of the specified frequency employed by the iterating component, based on an intraday electricity market projection and on providable electricity at the V2G corresponding to a time of the modification.

The system of any preceding paragraph, further comprising: wherein the scheduling component constructs the schedule to comprise data applicable over plural specified times corresponding to plural apexes of a specified frequency driving regeneration of the schedule.

A computer-implemented method, comprising: generating, by a system operatively coupled to a processor, a fleet-level solution for maintaining a vehicle-to-grid (V2G) system by a fleet of electric vehicles (EVs); and constructing, by the system, a schedule for bidirectional charging of a portion of the fleet by disaggregating the fleet-level solution based on a multi-class classification resulting from an execution of a quantum algorithm, based on a covariant quantum kernel, on a quantum system.

The computer-implemented method of the preceding paragraph, wherein the covariant quantum kernel is tuned based on an assumption of a group structure employing a discrete set of classes upon which the multi-class classification is based.

The computer-implemented method of any preceding paragraph, wherein the schedule comprises a bidirectional charging suggestion for at least one class of the discrete set of classes upon which the covariant quantum kernel has been tuned.

The computer-implemented method of any preceding paragraph, wherein the multi-class classification comprises classes of charging, discharging, and no bidirectional charging.

The computer-implemented method of any preceding paragraph, further comprising: generating, by the system, a quantum a kernel alignment that guides generation of the covariant quantum kernel, wherein the quantum kernel alignment is based on an assumption of a group structure; and training, by the system, a prediction model, employed for the fleet-level solution generating, based on the covariant quantum kernel.

The computer-implemented method of any preceding paragraph, further comprising: classifying, by the system, individual EVs of the fleet for bidirectional charging by comparing a feature set, comprising individual EV charge state data and individual EV connection state data, to the fleet-level solution.

A computer program product facilitating a process to maintain a vehicle-to-grid system, the computer program product comprising a computer readable storage medium having program instructions embodied therewith, the program instructions executable by a processor to cause the processor to: generate, by the processor, a fleet-level solution for maintaining the vehicle-to-grid (V2G) system by a fleet of electric vehicles (EVs); and construct, by the processor, a schedule for bidirectional charging of a portion of the fleet by disaggregating the fleet-level solution based on a multi-class classification resulting from an execution of a quantum algorithm, based on a covariant quantum kernel, on a quantum system.

The computer program product of the preceding paragraph, wherein the covariant quantum kernel is tuned based on an assumption of a group structure employing a discrete set of classes upon which the multi-class classification is based.

The computer program product of any preceding paragraph, wherein the schedule comprises a bidirectional charging suggestion for at least one class of the discrete set of classes upon which the covariant quantum kernel has been tuned.

The computer program product of any preceding paragraph, wherein the multi-class classification comprises classes of charging, discharging, and no bidirectional charging.

COMPUTING ENVIRONMENT DESCRIPTION

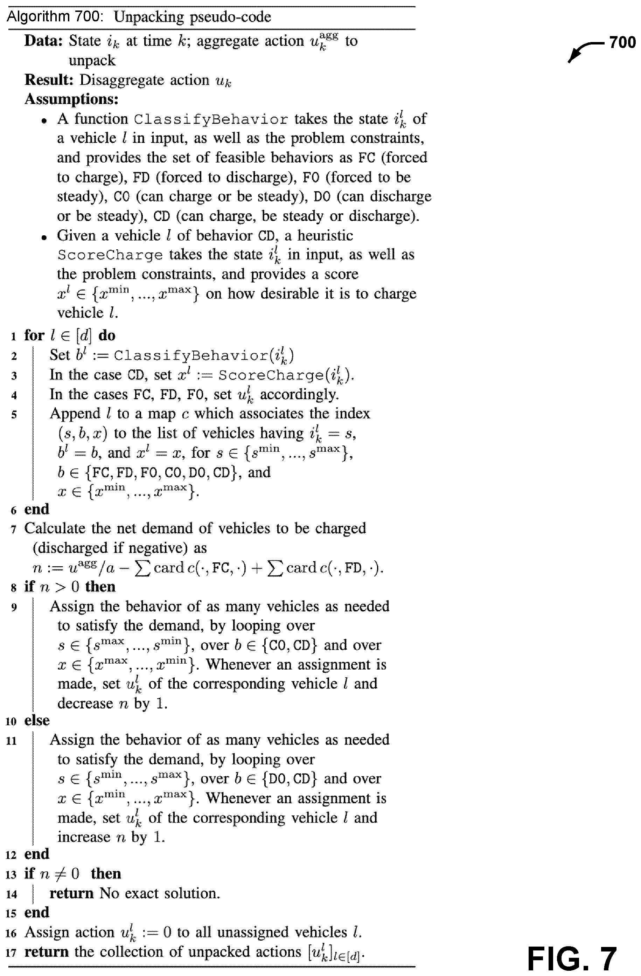

Turning next to FIG. 12, a detailed description is provided of additional context for the one or more embodiments described herein at FIGS. 1-11.

FIG. 12 and the following discussion are intended to provide a brief, general description of a suitable computing environment 1200 in which one or more embodiments described herein at FIGS. 1-11 can be implemented. For example, various aspects of the present disclosure are described by narrative text, flowcharts, block diagrams of computer systems and/or block diagrams of the machine logic included in computer program product (CPP) embodiments. With respect to any flowcharts, depending upon the technology involved, the operations can be performed in a different order than what is shown in a given flowchart. For example, again depending upon the technology involved, two operations shown in successive flowchart blocks may be performed in reverse order, as a single integrated step, concurrently or in a manner at least partially overlapping in time.

A computer program product embodiment ("CPP embodiment" or "CPP") is a term used in the present disclosure to describe any set of one, or more, storage media (also called "mediums") collectively included in a set of one, or more, storage devices that collectively include machine readable code corresponding to instructions and/or data for performing computer operations specified in a given CPP claim. A "storage device" is any tangible device that can retain and store instructions for use by a computer processor. Without limitation, the computer readable storage medium may be an electronic storage medium, a magnetic storage medium, an optical storage medium, an electromagnetic storage medium, a semiconductor storage medium, a mechanical storage medium, or any suitable combination of the foregoing. Some known types of storage devices that include these mediums include diskette, hard disk, random access memory (RAM), read-only memory (ROM), erasable programmable read-only memory (EPROM or Flash memory), static random-access memory (SRAM), compact disc read-only memory (CD-ROM), digital versatile disk (DVD), memory stick, floppy disk, mechanically encoded device (such as punch cards or pits / lands formed in a major surface of a disc) or any suitable combination of the foregoing. A computer readable storage medium, as that term is used in the present disclosure, is not to be construed as storage in the form of transitory signals *per se*, such as radio waves or other freely propagating electromagnetic waves, electromagnetic waves propagating through a waveguide, light pulses passing through a fiber optic cable, electrical signals communicated through a wire, and/or other transmission media. As will be understood by those of skill in the art, data is typically moved at some occasional points in time during normal operations of a storage device, such as during access, de-fragmentation or garbage collection, but this does not render the storage device as transitory because the data is not transitory while it is stored.

Computing environment 1200 contains an example of an environment for the execution of at least some of the computer code involved in performing the inventive methods, such as translation of an original source code based on a configuration of a target system by the bidirectional charging determination code 1280. In addition to block 1280, computing environment 1200 includes, for example, computer 1201, wide area network (WAN) 1202, end user device (EUD) 1203, remote server 1204, public cloud 1205, and private cloud 1206. In this embodiment, computer 1201 includes processor set 1210 (including processing circuitry 1220 and cache 1221), communication fabric 1211, volatile memory 1212, persistent storage 1213 (including operating system 1222 and block 1280, as identified above), peripheral device set 1214 (including user interface (UI), device set 1223, storage 1224, and Internet of Things (IoT) sensor set 1225), and network module 12112. Remote server 1204 includes remote database 1230. Public cloud 1205 includes gateway 1240, cloud orchestration module 1241, host physical machine set 1242, virtual machine set 1243, and container set 1244.

COMPUTER 1201 may take the form of a desktop computer, laptop computer, tablet computer, smart phone, smart watch or other wearable computer, mainframe computer, quantum computer or any other form of computer or mobile device now known or to be developed in the future that is capable of running a program, accessing a network or querying a database, such as remote database 1230. As is well understood in the art of computer technology, and depending upon the technology, performance of a computer-implemented method may be distributed among multiple computers and/or between multiple locations. On the other hand, in this presentation of computing environment 1200, detailed discussion is focused on a single computer, specifically computer 1201, to keep the presentation as simple as possible. Computer 1201 may be located in a cloud, even though it is not shown in a cloud in FIG. 12. On the other hand, computer 1201 is not required to be in a cloud except to any extent as may be affirmatively indicated.

PROCESSOR SET 1210 includes one, or more, computer processors of any type now known or to be developed in the future. Processing circuitry 1220 may be distributed over multiple packages, for example, multiple, coordinated integrated circuit chips. Processing circuitry 1220 may implement multiple processor threads and/or multiple processor cores. Cache 1221 is memory that is located in the processor chip package and is typically used for data or code that should be available for rapid access by the threads or cores running on processor set 1210. Cache memories are typically organized into multiple levels depending upon relative proximity to the processing circuitry. Alternatively, some, or all, of the cache for the processor set may be located "off chip." In some computing environments, processor set 1210 may be designed for working with qubits and performing quantum computing.

Computer readable program instructions are typically loaded onto computer 1201 to cause a series of operational steps to be performed by processor set 1210 of computer 1201 and thereby effect a computer-implemented method, such that the instructions thus executed will instantiate the methods specified in flowcharts and/or narrative descriptions of computer-implemented methods included in this document (collectively referred to as "the inventive methods"). These computer readable program instructions are stored in various types of computer readable storage media, such as cache 1221 and the other storage media discussed below. The program instructions, and associated data, are accessed by processor set 1210 to control and direct performance of the inventive methods. In computing environment 1200, one or more instructions for performing the inventive methods may be stored in block 1280 in persistent storage 1213.

COMMUNICATION FABRIC 1211 is the signal conduction path that allows the various components of computer 1201 to communicate with each other. Typically, this fabric is made of switches and electrically conductive paths, such as the switches and electrically conductive paths that make up busses, bridges, physical input / output ports and the like. Other types of signal communication paths may be used, such as fiber optic communication paths and/or wireless communication paths.

VOLATILE MEMORY 1212 is any type of volatile memory now known or to be developed in the future. Examples include dynamic type random access memory (RAM) or static type RAM. Typically, the volatile memory is characterized by random access, but this is not required unless affirmatively indicated. In computer 1201, the volatile memory 1212 is located in a single package and is internal to computer 1201, but, alternatively or additionally, the volatile memory may be distributed over multiple packages and/or located externally with respect to computer 1201.

PERSISTENT STORAGE 1213 is any form of non-volatile storage for computers that is now known or to be developed in the future. The non-volatility of this storage means that the stored data is maintained regardless of whether power is being supplied to computer 1201 and/or directly to persistent storage 1213. Persistent storage 1213 may be a read only memory (ROM), but typically at least a portion of the persistent storage allows writing of data, deletion of data and re-writing of data. Some familiar forms of persistent storage include magnetic disks and solid-state storage devices. Operating system 1222 may take several forms, such as various known proprietary operating systems or open-source Portable Operating System Interface type operating systems that employ a kernel. The code included in block 1280 typically includes at least some of the computer code involved in performing the inventive methods.

PERIPHERAL DEVICE SET 1214 includes the set of peripheral devices of computer 1201. Data communication connections between the peripheral devices and the other components of computer 1201 may be implemented in various ways, such as Bluetooth connections, Near-Field Communication (NFC) connections, connections made by cables (such as universal serial bus (USB) type cables), insertion type connections (for example, secure digital (SD) card), connections made though local area communication networks and even connections made through wide area networks such as the internet. In various embodiments, UI device set 1223 may include components such as a display screen, speaker, microphone, wearable devices (such as goggles and smart watches), keyboard, mouse, printer, touchpad, game controllers, and haptic devices. Storage 1224 is external storage, such as an external hard drive, or insertable storage, such as an SD card. Storage 1224 may be persistent and/or volatile. In some embodiments, storage 1224 may take the form of a quantum computing storage device for storing data in the form of qubits. In embodiments where computer 1201 is required to have a large amount of storage (for example, where computer 1201 locally stores and manages a large database) then this storage may be provided by peripheral storage devices designed for storing large amounts of data, such as a storage area network (SAN) that is shared by multiple, geographically distributed computers. IoT sensor set 1225 is made up of sensors that can be used in Internet of Things applications. For example, one sensor may be a thermometer and another sensor may be a motion detector.

NETWORK MODULE 1215 is the collection of computer software, hardware, and firmware that allows computer 1201 to communicate with other computers through WAN 1202. Network module 1215 may include hardware, such as modems or Wi-Fi signal transceivers, software for packetizing and/or de-packetizing data for communication network transmission, and/or web browser software for communicating data over the internet. In some embodiments, network control functions and network forwarding functions of network module 1215 are performed on the same physical hardware device. In other embodiments (for example, embodiments that utilize software-defined networking (SDN)), the control functions and the forwarding functions of network module 1215 are performed on physically separate devices, such that the control functions manage several different network hardware devices. Computer readable program instructions for performing the inventive methods can typically be downloaded to computer 1201 from an external computer or external storage device through a network adapter card or network interface included in network module 1215.

WAN 1202 is any wide area network (for example, the internet) capable of communicating computer data over non-local distances by any technology for communicating computer data, now known or to be developed in the future. In some embodiments, the WAN may be replaced and/or supplemented by local area networks (LANs) designed to communicate data between devices located in a local area, such as a Wi-Fi network. The WAN and/or LANs typically include computer hardware such as copper transmission cables, optical transmission fibers, wireless transmission, routers, firewalls, switches, gateway computers and edge servers.

END USER DEVICE (EUD) 1203 is any computer system that is used and controlled by an end user (for example, a customer of an enterprise that operates computer 1201) and may take any of the forms discussed above in connection with computer 1201. EUD 1203 typically receives helpful and useful data from the operations of computer 1201. For example, in a hypothetical case where computer 1201 is designed to provide a recommendation to an end user, this recommendation would typically be communicated from network module 1215 of computer 1201 through WAN 1202 to EUD 1203. In this way, EUD 1203 can display, or otherwise present, the recommendation to an end user. In some embodiments, EUD 1203 may be a client device, such as thin client, heavy client, mainframe computer, desktop computer and so on.

REMOTE SERVER 1204 is any computer system that serves at least some data and/or functionality to computer 1201. Remote server 1204 may be controlled and used by the same entity that operates computer 1201. Remote server 1204 represents the machine that collects and stores helpful and useful data for use by other computers, such as computer 1201. For example, in a hypothetical case where computer 1201 is designed and programmed to provide a recommendation based on historical data, then this historical data may be provided to computer 1201 from remote database 1230 of remote server 1204.

PUBLIC CLOUD 1205 is any computer system available for use by multiple entities that provides on-demand availability of computer system resources and/or other computer capabilities, especially data storage (cloud storage) and computing power, without direct active management by the scale. The direct and active management of the computing resources of public cloud 1205 is performed by the computer hardware and/or software of cloud orchestration module 1241. The computing resources provided by public cloud 1205 are typically implemented by virtual computing environments that run on various computers making up the computers of host physical machine set 1242, which is the universe of physical computers in and/or available to public cloud 1205. The virtual computing environments (VCEs) typically take the form of virtual machines from virtual machine set 1243 and/or containers from container set 1244. It is understood that these VCEs may be stored as images and may be transferred among and between the various physical machine hosts, either as images or after instantiation of the VCE. Cloud orchestration module 1241 manages the transfer and storage of images, deploys new instantiations of VCEs and manages active instantiations of VCE deployments. Gateway 1240 is the collection of computer software, hardware, and firmware that allows public cloud 1205 to communicate via WAN 1202.

Some further explanation of virtualized computing environments (VCEs) will now be provided. VCEs can be stored as "images." A new active instance of the VCE can be instantiated from the image. Two familiar types of VCEs are virtual machines and containers. A container is a VCE that uses operating-system-level virtualization. This refers to an operating system feature in which the kernel allows the existence of multiple isolated user-space instances, called containers. These isolated user-space instances typically behave as real computers from the point of view of programs running in them. A computer program running on an ordinary operating system can utilize all resources of that computer, such as connected devices, files and folders, network shares, CPU power, and quantifiable hardware capabilities.

However, programs running inside a container can only use the contents of the container and devices assigned to the container, a feature which is known as containerization.

PRIVATE CLOUD 1206 is similar to public cloud 1205, except that the computing resources are only available for use by a single enterprise. While private cloud 1206 is depicted as being in communication with WAN 1202, in other embodiments a private cloud may be disconnected from the internet entirely and only accessible through a local/private network. A hybrid cloud is a composition of multiple clouds of different types (for example, private, community or public cloud types), often respectively implemented by different vendors. Each of the multiple clouds remains a separate and discrete entity, but the larger hybrid cloud architecture is bound together by standardized or proprietary technology that enables orchestration, management, and/or data/application portability between the multiple constituent clouds. In this embodiment, public cloud 1205 and private cloud 1206 are both part of a larger hybrid cloud.

ADDITIONAL CLOSING INFORMATION

The embodiments described herein can be directed to one or more of a system, a method, an apparatus and/or a computer program product at any possible technical detail level of integration. The computer program product can include a computer readable storage medium (or media) having computer readable program instructions thereon for causing a processor to carry out aspects of the one or more embodiments described herein. The computer readable storage medium can be a tangible device that can retain and store instructions for use by an instruction execution device. The computer readable storage medium can be, for example, but is not limited to, an electronic storage device, a magnetic storage device, an optical storage device, an electromagnetic storage device, a superconducting storage device and/or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon and/or any suitable combination of the foregoing. A computer readable storage medium, as used herein, is not to be construed as being transitory signals per se, such as radio waves and/or other freely propagating electromagnetic waves, electromagnetic waves propagating through a waveguide and/or other transmission media (e.g., light pulses passing through a fiber-optic cable), and/or electrical signals transmitted through a wire.

Computer readable program instructions described herein can be downloaded to respective computing/processing devices from a computer readable storage medium and/or to an external computer or external storage device via a network, for example, the Internet, a local area network, a wide area network and/or a wireless network. The network can comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of the one or more embodiments described herein can be assembler instructions, instruction-set-architecture (ISA) instructions, machine instructions, machine dependent instructions, microcode, firmware instructions, state-setting data, configuration data for integrated circuitry, and/or source code and/or object code written in any combination of one or more programming languages, including an object oriented programming language such as Smalltalk, C++ or the like, and/or procedural programming languages, such as the "C" programming language and/or similar programming languages. The computer readable program instructions can execute entirely on a computer, partly on a computer, as a stand-alone software package, partly on a computer and/or partly on a remote computer or entirely on the remote computer and/or server. In the latter scenario, the remote computer can be connected to a computer through any type of network, including a local area network (LAN) and/or a wide area network (WAN), and/or the connection can be made to an external computer (for example, through the Internet using an Internet Service Provider). In one or more embodiments, electronic circuitry including, for example, programmable logic circuitry, field-programmable gate arrays (FPGA) and/or programmable logic arrays (PLA) can execute the computer readable program instructions by utilizing state information of the computer readable program instructions to personalize the electronic circuitry, in order to perform aspects of the one or more embodiments described herein.

Aspects of the one or more embodiments described herein are described with reference to flowchart illustrations and/or block diagrams of methods, apparatus (systems), and computer program products according to one or more embodiments described herein. It will be understood that each block of the flowchart illustrations and/or block diagrams, and combinations of blocks in the flowchart illustrations and/or block diagrams, can be implemented by computer readable program instructions. These computer readable program instructions can be provided to a processor of a general-purpose computer, special purpose computer and/or other programmable data processing apparatus to produce a machine, such that the instructions, which execute via the processor of the computer or other programmable data processing apparatus, can create means for implementing the functions/acts specified in the flowchart and/or block diagram block or blocks.

These computer readable program instructions can also be stored in a computer readable storage medium that can direct a computer, a programmable data processing apparatus and/or other devices to function in a particular manner, such that the computer readable storage medium having instructions stored therein can comprise an article of manufacture including instructions which can implement aspects of the function/act specified in the flowchart and/or block diagram block or blocks. The computer readable program instructions can also be loaded onto a computer, other programmable data processing apparatus and/or other device to cause a series of operational acts to be performed on the computer, other programmable apparatus and/or other device to produce a computer implemented process, such that the instructions which execute on the computer, other programmable apparatus and/or other device implement the functions/acts specified in the flowchart and/or block diagram block or blocks.

The flowcharts and block diagrams in the figures illustrate the architecture, functionality and/or operation of possible implementations of systems, computer-implementable methods and/or computer program products according to one or more embodiments described herein. In this regard, each block in the flowchart or block diagrams can represent a module, segment and/or portion of instructions, which comprises one or more executable instructions for implementing the specified logical function. In one or more alternative implementations, the functions noted in the blocks can occur out of the order noted in the Figures. For example, two blocks shown in succession can be executed substantially concurrently, and/or the blocks can sometimes be executed in the reverse order, depending upon the functionality involved. It will also be noted that each block of the block diagrams and/or flowchart illustration, and/or combinations of blocks in the block diagrams and/or flowchart illustration, can be implemented by special purpose hardware-based systems that can perform the specified functions and/or acts and/or carry out one or more combinations of special purpose hardware and/or computer instructions.

While the subject matter has been described above in the general context of computer-executable instructions of a computer program product that runs on a computer and/or computers, those skilled in the art will recognize that the one or more embodiments herein also can be implemented at least partially in parallel with one or more other program modules. Generally, program modules include routines, programs, components and/or data structures that perform particular tasks and/or implement particular abstract data types. Moreover, the aforedescribed computer-implemented methods can be practiced with other computer system configurations, including single-processor and/or multiprocessor computer systems, mini-computing devices, mainframe computers, as well as computers, hand-held computing devices (e.g., PDA, phone), and/or microprocessor-based or programmable consumer and/or industrial electronics. The illustrated aspects can also be practiced in distributed computing environments in which tasks are performed by remote processing devices that are linked through a communications network. However, one or more, if not all aspects of the one or more embodiments described herein can be practiced on stand-alone computers. In a distributed computing environment, program modules can be located in both local and remote memory storage devices.

As used in this application, the terms "component," "system," "platform" and/or "interface" can refer to and/or can include a computer-related entity or an entity related to an operational machine with one or more specific functionalities. The entities described herein can be either hardware, a combination of hardware and software, software, or software in execution. For example, a component can be, but is not limited to being, a process running on a processor, a processor, an object, an executable, a thread of execution, a program and/or a computer. By way of illustration, both an application running on a server and the server can be a component. One or more components can reside within a process and/or thread of execution and a component can be localized on one computer and/or distributed between two or more computers. In another example, respective components can execute from various computer readable media having various data structures stored thereon. The components can communicate via local and/or remote processes such as in accordance with a signal having one or more data packets (e.g., data from one component interacting with another component in a local system, distributed system and/or across a network such as the Internet with other systems via the signal). As another example, a component can be an apparatus with specific functionality provided by mechanical parts operated by electric or electronic circuitry, which is operated by a software and/or firmware application executed by a processor. In such a case, the processor can be internal and/or external to the apparatus and can execute at least a part of the software and/or firmware application. As yet another example, a component can be an apparatus that provides specific functionality through electronic components without mechanical parts, where the electronic components can include a processor and/or other means to execute software and/or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form. As used herein, the terms "example" and/or "exemplary" are utilized to mean serving as an example, instance, or illustration. For the avoidance of doubt, the subject matter described herein is not limited by such examples. In addition, any aspect or design described herein as an "example" and/or "exemplary" is not necessarily to be construed as preferred or advantageous over other aspects or designs, nor is it meant to preclude equivalent exemplary structures and techniques known to those of ordinary skill in the art.

As it is employed in the subject specification, the term "processor" can refer to substantially any computing processing unit and/or device comprising, but not limited to, single-core processors; single-processors with software multithread execution capability; multi-core processors; multi-core processors with software multithread execution capability; multi-core processors with hardware multithread technology; parallel platforms; and/or parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, and/or any combination thereof designed to perform the functions described herein. Further, processors can exploit nano-scale architectures such as, but not limited to, molecular and quantum-dot based transistors, switches and/or gates, in order to optimize space usage and/or to enhance performance of related equipment. A processor can be implemented as a combination of computing processing units.

Herein, terms such as "store," "storage," "data store," data storage," "database," and substantially any other information storage component relevant to operation and functionality of a component are utilized to refer to "memory components," entities embodied in a "memory," or components comprising a memory. Memory and/or memory components described herein can be either volatile memory or nonvolatile memory or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory and/or nonvolatile random-access memory (RAM) (e.g., ferroelectric RAM (FeRAM). Volatile memory can include RAM, which can act as external cache memory, for example. By way of illustration and not limitation, RAM can be available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM) and/or Rambus dynamic RAM (RDRAM). Additionally, the described memory components of systems and/or computer-implemented methods herein are intended to include, without being limited to including, these and/or any other suitable types of memory.

What has been described above includes mere examples of systems and computer-implemented methods. It is, of course, not possible to describe every conceivable combination of components and/or computer-implemented methods for purposes of describing the one or more embodiments, but one of ordinary skill in the art can recognize that many further combinations and/or permutations of the one or more embodiments are possible. Furthermore, to the extent that the terms "includes," "has," "possesses," and the like are used in the detailed description, claims, appendices and/or drawings such terms are intended to be inclusive in a manner similar to the term "comprising" as "comprising" is interpreted when employed as a transitional word in a claim.

The descriptions of the various embodiments have been presented for purposes of illustration but are not intended to be exhaustive or limited to the embodiments described herein. Many modifications and variations will be apparent to those of ordinary skill in the art without departing from the scope and spirit of the described embodiments. The terminology used herein was chosen to best explain the principles of the embodiments, the practical application and/or technical improvement over technologies found in the marketplace, and/or to enable others of ordinary skill in the art to understand the embodiments described herein.

## Claims

1. A system, comprising:

   a memory that stores computer executable components; and
   a processor that executes the computer executable components stored in the memory, wherein the computer executable components comprise:

   an optimizing component that generates a fleet-level solution for maintaining a vehicle-to-grid (V2G) system by a fleet of electric vehicles (EVs); and
   a scheduling component that constructs a schedule for bidirectional charging of a portion of the fleet by disaggregating the fleet-level solution based on a multi-class classification resulting from an execution of a quantum algorithm, based on a covariant quantum kernel, on a quantum system.

2. The system of claim 1, wherein the covariant quantum kernel is tuned based on an assumption of a group structure employing a discrete set of classes upon which the multi-class classification is based, wherein in particular the schedule comprises a bidirectional charging suggestion for at least one class of the discrete set of classes upon which the covariant quantum kernel has been tuned.

3. The system of claim 1 or 2, wherein the multi-class classification comprises classes of charging, discharging, and no bidirectional charging.

4. The system according to any one of the preceding claims, wherein the computer executable components further comprise:

a training component that generates a quantum kernel alignment that guides generation of the covariant quantum kernel,
wherein preferably the quantum kernel alignment is based on an assumption of a group structure, and
wherein the training component trains a prediction model, employed by the optimizing component, based on the covariant quantum kernel.

5. The system according to any one of the preceding claims, wherein the scheduling component classifies individual EVs of the fleet for bidirectional charging by comparing a feature set, comprising individual EV charge state data and individual EV connection state data, to the fleet-level solution.

6. The system according to any one of the preceding claims, wherein the computer executable components further comprise:

an aggregating component that constructs a fleet-level feature set corresponding to a specified time by transforming individual EV charge state data and individual EV connection state data for a plurality of EVs of the fleet into the higher granularity fleet-level feature set; and
a covariant quantum kernel-based prediction model that employs the fleet-level feature set as an input for the generation of the fleet-level solution that comprises the multi-class classification.

7. The system according to any one of the preceding claims, wherein the computer executable components further comprise:

an iterating component that controls re-construction of the schedule at a specified frequency corresponding to a set of specified times over a specified time range,
wherein the iterating component initiates the re-construction of the schedule prior to output of the schedule.

8. The system of claim 7, wherein the computer executable components further comprise:

a modifying component executes a modification of the specified frequency employed by the iterating component, based on an intraday electricity market projection and on providable electricity at the V2G corresponding to a time of the modification,
and/or
wherein the scheduling component constructs the schedule to comprise data applicable over plural specified times corresponding to plural apexes of a specified frequency driving regeneration of the schedule.

9. A computer-implemented method, in particular for a system according to any one of the preceding system claims, comprising:

generating, by a system operatively coupled to a processor, a fleet-level solution for maintaining a vehicle-to-grid (V2G) system by a fleet of electric vehicles (EVs); and
constructing, by the system, a schedule for bidirectional charging of a portion of the fleet by disaggregating the fleet-level solution based on a multi-class classification resulting from an execution of a quantum algorithm, based on a covariant quantum kernel, on a quantum system.

10. The computer-implemented method of claim 9, wherein the covariant quantum kernel is tuned based on an assumption of a group structure employing a discrete set of classes upon which the multi-class classification is based.

11. The computer-implemented method of claim 10, wherein the schedule comprises a bidirectional charging suggestion for at least one class of the discrete set of classes upon which the covariant quantum kernel has been tuned.

**12.** The computer-implemented method according to one of the claims 9 to 11, further comprising:

generating, by the system, a quantum kernel alignment that guides generation of the covariant quantum kernel, wherein in particular the quantum kernel alignment is based on an assumption of a group structure; and training, by the system, a prediction model, employed for the fleet-level solution generating, based on the covariant quantum kernel.

**13.** The computer-implemented method according to any one of the claims 9 to 12, further comprising:
classifying, by the system, individual EVs of the fleet for bidirectional charging by comparing a feature set, comprising individual EV charge state data and individual EV connection state data, to the fleet-level solution.

**14.** A computer program product facilitating a process to maintain a vehicle-to-grid system, in particular by implementing a method according to any one of the claims 9 to 13, the computer program product comprising a computer readable storage medium having program instructions embodied therewith, the program instructions executable by a processor to cause the processor to:

generate, by the processor, a fleet-level solution for maintaining the vehicle-to-grid (V2G) system by a fleet of electric vehicles (EVs); and
construct, by the processor, a schedule for bidirectional charging of a portion of the fleet by disaggregating the fleet-level solution based on a multi-class classification resulting from an execution of a quantum algorithm, based on a covariant quantum kernel, on a quantum system.

**15.** The computer program product of claim 14, wherein the covariant quantum kernel is tuned based on an assumption of a group structure employing a discrete set of classes upon which the multi-class classification is based, wherein in particular the schedule comprises a bidirectional charging suggestion for at least one class of the discrete set of classes upon which the covariant quantum kernel has been tuned, wherein in particular the multi-class classification comprises classes of charging, discharging, and no bidirectional charging.

FIG. 1

FIG. 2

**300**

QUANTUM SYSTEM 301

QUANTUM MEASUREMENT READOUT 320

ORCHESTRATOR COMPONENT 303

PROCESSOR 314

MEMORY 316

311

308

310

312

CLASSICAL SYSTEM 202

QUANTUM JOB REQUEST 324

| QUBIT CONTROL ELECTRONICS 308A | QUBIT CONTROL ELECTRONICS 308B | QUBIT CONTROL ELECTRONICS 308A |
|---|---|---|
| WAVEFORM GENERATOR 310A | WAVEFORM GENERATOR 310B | WAVEFORM GENERATOR 310B |
| READOUT ELECTRONICS 312A | READOUT ELECTRONICS 312B | READOUT ELECTRONICS 312B |

317

307

306

| QUBIT 307A | QUBIT 307B | QUBIT 307C |
|---|---|---|

**FIG. 3**

FIG. 4

# END TO END WORKFLOW 500

PREPARATION PHASE 510 →→→→→→→→→ SOLUTION PHASE 520 →→→→→→→→

FIG. 5A

EP 4 671 038 A1

**PREPARATION PHASE 510**

CLASSIFICATION DATA 254 → QKA 590 → CQK 252 → AA

INPUT DATA 213

512 TRAINING SCENARIO 580 → 514 SOLVER ALGORITHM 600 → 516 TRAINING DATASET 513 → 518 PREDICTION MODEL 216 → BB

**SOLUTION PHASE 520 (522)**

AA → QUANTUM ALGORITHM 250 → QUANTUM CIRCUITS 260 → QUANTUM SYSTEM 301 → MEASUREMENT OUTPUT 320 → EXPECTATION VALUES 286

CLASSIFICATION INPUT 550

544 FINAL OUTCOME 289 ← NO ← 542 ANOTHER TIME $k$? ← 540 DISAGGREGATING/ UNPACKING ALGORITHM 700 ← 538 FLEET-LEVEL SOLUTION 240 / MULTI-CLASS CLASSIFICATION 242 ← 538 PREDICTION MODEL 216 ← 536 FLEET-LEVEL FEATURE SET 238

BB

YES — 534

**FIG. 5B**

500

EP 4 671 038 A1

35

---

**Algorithm** 600: Aggregate dynamic programming pseudo-code

<span style="float:right">600</span>

---

**Data:** Reward function; Min- and max-charge threshold; EVs initial charge; State dynamics function.

**Result:** Charge/discharge schedule

**Assumptions:**

- Let $U_k^{\text{agg}} := \{\texttt{ActionAgg}(u) \mid u \in U_k\}$
- The $\texttt{ActionUnpack}$ heuristic takes an aggregate action $u^{\text{agg}} \in U_k^{\text{agg}}$ and a previous state $i_k$ in input, and provides one unpacked action $u$ (if it exists) such that: $u \in U_k$, $\texttt{ActionAgg}(u) = u^{\text{agg}}$, and $i_{k-1} = f(i_k, u)$ is feasible

**Internal data structures:**

- $S_k$ stores a collection of mappings of the form $i_k^{\text{agg}} \mapsto (i_k(i_k^{\text{agg}}), J_{N-k}(i_k^{\text{agg}}), M_k(i_k^{\text{agg}}))$, where $i_k^{\text{agg}}$ is an aggregate state at time $k$, $i_k(i_k^{\text{agg}})$ is the best-so-far unpacked state, $J_{N-k}(i_k^{\text{agg}})$ is the best-so-far cost-to-go, and $M_k(i_k^{\text{agg}})$ is the best-so-far set of actions until the end of the horizon

Compute initial state $i_0$ and $i_0^{\text{agg}} \leftarrow \texttt{StateAgg}(i_0)$

Compute final state $i_N$ and $i_N^{\text{agg}} \leftarrow \texttt{StateAgg}(i_N)$

Store $S_N \leftarrow \{i_N^{\text{agg}} \mapsto (i_N, 0, \emptyset)\}$

**for** $k \in \{N, \ldots, 1\}$ **do**

    Initialize $S_{k-1} = \emptyset$

    **for** *all aggregate states* $i_k^{\text{agg}} \in S_k$ **do**

        **for** *all aggregate actions* $u^{\text{agg}} \in U_k^{\text{agg}}$ **do**

            Call $u \leftarrow \texttt{ActionUnpack}(u^{\text{agg}}, i_k(i_k^{\text{agg}}))$; if no solution is returned, **continue**

            $i_{k-1} \leftarrow f(i_k, u)$

            $i_{k-1}^{\text{agg}} \leftarrow \texttt{StateAgg}(i_{k-1})$

            $c \leftarrow g(i_{k-1}, u, i_k) + J_{N-k}(i_k^{\text{agg}})$

            **if** $i_{k-1}^{\text{agg}} \notin S_{k-1}$ *or* $c$ *is smaller than the stored* $J_{N-k+1}(i_{k-1}^{\text{agg}})$ **then**

                Update the storage $S_{k-1}$ with the record $\{i_{k-1}^{\text{agg}} \mapsto (i_{k-1}, c, \{u\} \cup M_k(i_k^{\text{agg}}))\}$

        **end**

    **end**

**end**

**if** $i_0^{\text{agg}} \in S_0$ **then**

    **return** $M_0(i_0^{\text{agg}})$

**end**

**return** No solution found

---

# FIG. 6

---

**Algorithm 700:** Unpacking pseudo-code

---

**Data:** State $i_k$ at time $k$; aggregate action $u_k^{\mathrm{agg}}$ to unpack

**Result:** Disaggregate action $u_k$

**Assumptions:**

- A function `ClassifyBehavior` takes the state $i_k^l$ of a vehicle $l$ in input, as well as the problem constraints, and provides the set of feasible behaviors as FC (forced to charge), FD (forced to discharge), F0 (forced to be steady), C0 (can charge or be steady), D0 (can discharge or be steady), CD (can charge, be steady or discharge).
- Given a vehicle $l$ of behavior CD, a heuristic `ScoreCharge` takes the state $i_k^l$ in input, as well as the problem constraints, and provides a score $x^l \in \{x^{\min}, ..., x^{\max}\}$ on how desirable it is to charge vehicle $l$.

**for** $l \in [d]$ **do**

   Set $b^l := \texttt{ClassifyBehavior}(i_k^l)$

   In the case CD, set $x^l := \texttt{ScoreCharge}(i_k^l)$.

   In the cases FC, FD, F0, set $u_k^l$ accordingly.

   Append $l$ to a map $c$ which associates the index $(s, b, x)$ to the list of vehicles having $i_k^l = s$, $b^l = b$, and $x^l = x$, for $s \in \{s^{\min}, ..., s^{\max}\}$, $b \in \{\mathrm{FC}, \mathrm{FD}, \mathrm{F0}, \mathrm{C0}, \mathrm{D0}, \mathrm{CD}\}$, and $x \in \{x^{\min}, ..., x^{\max}\}$.

**end**

Calculate the net demand of vehicles to be charged (discharged if negative) as

$$n := u^{\mathrm{agg}}/a - \sum \mathrm{card}\, c(\cdot, \mathrm{FC}, \cdot) + \sum \mathrm{card}\, c(\cdot, \mathrm{FD}, \cdot).$$

**if** $n > 0$ **then**

   Assign the behavior of as many vehicles as needed to satisfy the demand, by looping over $s \in \{s^{\max}, ..., s^{\min}\}$, over $b \in \{\mathrm{C0}, \mathrm{CD}\}$ and over $x \in \{x^{\max}, ..., x^{\min}\}$. Whenever an assignment is made, set $u_k^l$ of the corresponding vehicle $l$ and decrease $n$ by 1.

**else**

   Assign the behavior of as many vehicles as needed to satisfy the demand, by looping over $s \in \{s^{\min}, ..., s^{\max}\}$, over $b \in \{\mathrm{D0}, \mathrm{CD}\}$ and over $x \in \{x^{\min}, ..., x^{\max}\}$. Whenever an assignment is made, set $u_k^l$ of the corresponding vehicle $l$ and increase $n$ by 1.

**end**

**if** $n \neq 0$ **then**

   **return** No exact solution.

**end**

Assign action $u_k^l := 0$ to all unassigned vehicles $l$.

**return** the collection of unpacked actions $[u_k^l]_{l \in [d]}$.

---

700

# FIG. 7

---

Algorithm 800: Optimization through action prediction
pseudo-code

---

**Data:** Min- and max-charge threshold; EVs initial
charge; State dynamics function $f$.

**Result:** Charge/discharge schedule

**Assumptions:**

- $\texttt{NextBestAction}_\theta(\texttt{Features}(k, i_k))$ is a trained
  prediction model that provides an estimate for the best
  action.

- The $\texttt{ActionUnpackAdjust}$ heuristic takes an
  aggregate action $u^{\text{agg}} \in U_k^{\text{agg}}$ and a previous state $i_k$ in
  input, and provides one unpacked action $u$ (if it exists)
  such that: $u \in U_k$, $\texttt{ActionAgg}(u) = u^{\text{agg}}$, and
  $i_{k-1} = f(i_k, u)$ is feasible

Compute initial state $i_0$

Compute final state $i_N$

**for** $k \in \{N, \ldots, 1\}$ **do**

Let

$\quad u^{\text{agg}} \leftarrow \texttt{NextBestAction}_\theta(\texttt{Features}(k, i_k))$

Call $u_k \leftarrow \texttt{ActionUnpackAdjust}(u^{\text{agg}}, i_k)$; if
no feasible solution is returned, **return** No
solution found

$i_{k-1} \leftarrow f(i_k, u_k)$

**end**

**return** $\{u_k\}_k$

---

FIG. 8

38

900

GENERATING, BY A SYSTEM OPERATIVELY COUPLED TO A PROCESSOR, A FLEET-LEVEL SOLUTION FOR MAINTAINING A VEHICLE-TO-GRID (V2G) SYSTEM BY A FLEET OF ELECTRIC VEHICLES (EVS).

902

CONSTRUCTING, BY THE SYSTEM, A SCHEDULE FOR BIDIRECTIONAL CHARGING OF A PORTION OF THE FLEET BY DISAGGREGATING THE FLEET-LEVEL SOLUTION BASED ON A MULTI-CLASS CLASSIFICATION OUTPUT RESULTING FROM AN EXECUTION OF A QUANTUM ALGORITHM, BASED ON A COVARIANT QUANTUM KERNEL, ON A QUANTUM SYSTEM.

904

YES

REPEAT FOR ANOTHER TIME k?

906

NO

END

FIG. 9

1000

1002 — OBTAINING, BY A SYSTEM OPERATIVELY COUPLED TO A PROCESSOR, A REQUEST FOR DETERMINING A SCHEDULE FOR MAINTAINING A VEHICLE-TO-GRID (V2G) SYSTEM BY A FLEET OF ELECTRIC VEHICLES (EVS).

1004 — TRAINING, BY THE SYSTEM, A QUANTUM A KERNEL ALIGNMENT THAT GUIDES GENERATION OF THE COVARIANT QUANTUM KERNEL, WHEREIN THE QUANTUM KERNEL ALIGNMENT IS BASED ON AN ASSUMPTION OF A GROUP STRUCTURE.

1006 — TUNING, BY THE SYSTEM, THE COVARIANT QUANTUM KERNEL BASED ON AN ASSUMPTION OF A GROUP STRUCTURE EMPLOYING A DISCRETE SET OF CLASSES UPON WHICH THE MULTI-CLASS CLASSIFICATION IS BASED.

1008 — TRAINING, BY THE SYSTEM, A PREDICTION MODEL, EMPLOYED BY THE OPTIMIZING COMPONENT FOR THE FLEET-LEVEL SOLUTION GENERATING, BASED ON THE COVARIANT QUANTUM KERNEL.

1010 — CONSTRUCTING, BY THE SYSTEM, A FLEET-LEVEL FEATURE SET CORRESPONDING TO A SPECIFIED TIME BY TRANSFORMING INDIVIDUAL EV CHARGE STATE DATA AND INDIVIDUAL EV CONNECTION STATE DATA INTO THE HIGHER GRANULARITY FLEET-LEVEL FEATURE SET.

1012 — GENERATING, BY THE SYSTEM, A FLEET-LEVEL SOLUTION (E.G., FLEET-LEVEL SOLUTION 240) FOR MAINTAINING THE V2G SYSTEM BY THE FLEET OF EVS.

B

1014 — EMPLOYING, BY THE SYSTEM, THE FLEET-LEVEL FEATURE SET AS AN INPUT FOR THE GENERATION OF THE FLEET-LEVEL SOLUTION THAT COMPRISES THE MULTI-CLASS CLASSIFICATION.

C

1016 — CLASSIFYING, BY THE SYSTEM, INDIVIDUAL EVS OF THE FLEET FOR BIDIRECTIONAL CHARGING BY COMPARING A FEATURE SET, COMPRISING INDIVIDUAL EV CHARGE STATE DATA AND INDIVIDUAL EV CONNECTION STATE DATA, TO THE FLEET-LEVEL SOLUTION.

1018 — CONSTRUCTING, BY THE SYSTEM, A SCHEDULE FOR BIDIRECTIONAL CHARGING OF A PORTION OF THE FLEET BY DISAGGREGATING THE FLEET-LEVEL SOLUTION BASED ON A MULTI-CLASS CLASSIFICATION OUTPUT RESULTING FROM EXECUTION OF A QUANTUM ALGORITHM, BASED ON THE COVARIANT QUANTUM KERNEL, ON A QUANTUM SYSTEM.

A

**FIG. 10**

A

1000

**1020** — CONSTRUCTING, BY THE SYSTEM, THE SCHEDULE FOR APPLICABILITY OVER PLURAL SPECIFIED TIMES CORRESPONDING TO PLURAL APEXES OF THE SPECIFIED FREQUENCY DRIVING REGENERATION OF THE SCHEDULE.

B
YES

REPEAT FOR ANOTHER PREDICTION MODEL?

**1022**

NO

C
YES

REPEAT FOR ANOTHER TIME k?

**1024**

NO

**1026** — CONTROLLING, BY THE SYSTEM, RE-CONSTRUCTION OF THE SCHEDULE AT A SPECIFIED FREQUENCY CORRESPONDING TO A SET OF SPECIFIED TIME OVER A SPECIFIED TIME RANGE.

**1028** — INITIATING, BY THE SYSTEM, THE RE-CONSTRUCTION OF THE SCHEDULE PRIOR TO AN OUTPUT OF THE SCHEDULE FOR BIDIRECTIONAL CHARGING.

**1030** — MODIFYING, BY THE SYSTEM, THE SPECIFIED FREQUENCY, BASED ON AN INTRADAY ELECTRICITY MARKET PROJECTION AND ON PROVIDABLE ELECTRICITY AT THE V2G CORRESPONDING TO A TIME OF THE MODIFICATION.

**FIG. 11**

1200

COMPUTER 1201

PROCESSOR SET 1210

PROCESSING CIRCUITRY 1220    CACHE 1221

COMMUNICATION FABRIC 1211

VOLATILE MEMORY 1212

PERSISTENT STORAGE 1213

OPERATING SYSTEM 1222

BIDIRECTIONAL CHARGING
DETERMINATION CODE 1280

PERIPHERAL DEVICE SET 1214

UI DEVICE SET 1223    STORAGE 1224    IoT SENSOR SET 1225

NETWORK MODULE 1215

WAN 1202

END USER DEVICE 1203

REMOTE SERVER 1204

REMOTE DATABASE 1230

PRIVATE CLOUD 1206

GATEWAY 1240

PUBLIC CLOUD 1205

CLOUD ORCHESTRATION MODULE 1241    HOST PHYSICAL MACHINE SET 1242

VIRTUAL MACHINE SET 1243    CONTAINER SET 1244

FIG. 12

# EP 4 671 038 A1

Europäisches
Patentamt
European
Patent Office
Office européen
des brevets

## EUROPEAN SEARCH REPORT

**Application Number**

EP 25 18 5375

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/049998 A1 (COWAN & ASSOCIATES MAN LTD [CA]) 6 April 2023 (2023-04-06) * paragraphs 90, 98-108, 122, 124, 131, 138, 142, 150, 151, 155-163, 193-196, 250-271; figures 1a-3, 7, 15, 16, 20, 21 * | 1-15 | INV. B60L55/00 G06N10/60 H02J3/32 B60L53/63 B60L53/64 B60L53/66 |
| X | US 2023/286411 A1 (KANAZAWA HIROYUKI [JP]) 14 September 2023 (2023-09-14) * paragraphs 20-81; figures 1-10 * | 1-15 | B60L53/67 B60L53/68 |
| A | GLICK JENNIFER R. ET AL: "Covariant quantum kernels for data with group structure", NATURE PHYSICS, vol. 20, no. 3, 19 January 2024 (2024-01-19), pages 479-483, XP093330420, GB ISSN: 1745-2473, DOI: 10.1038/s41567-023-02340-9 * the whole document * | 1-15 | |

TECHNICAL FIELDS SEARCHED (IPC)

B60L
H02J
G06N

The present search report has been drawn up for all claims

| Place of search | Date of completion of the search | Examiner |
|---|---|---|
| The Hague | 3 November 2025 | Bronski, Bartlomiej |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

43

## ANNEX TO THE EUROPEAN SEARCH REPORT
## ON EUROPEAN PATENT APPLICATION NO.

EP 25 18 5375

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2025

| Patent document cited in search report | Publication date | Patent family member(s) | | Publication date |
|---|---|---|---|---|
| WO 2023049998 A1 | 06-04-2023 | CA | 3230281 A1 | 06-04-2023 |
| | | US | 2025033517 A1 | 30-01-2025 |
| | | WO | 2023049998 A1 | 06-04-2023 |
| US 2023286411 A1 | 14-09-2023 | EP | 4242045 A1 | 13-09-2023 |
| | | JP | 7756027 B2 | 17-10-2025 |
| | | JP | 2023132620 A | 22-09-2023 |
| | | US | 2023286411 A1 | 14-09-2023 |

EPO FORM P0459

For more details about this annex : see Official Journal of the European Patent Office, No. 12/82